# EUROPEAN PATENT APPLICATION

(11) **EP 4 818 839 A1**
(43) Date of publication of application: **07.10.2026**
(21) Application number: 24896213.6
(22) Date of filing: 06.11.2024
(51) Int. Cl.: G05D 1/43

(54) **REFERENCE GUIDANCE DIRECTION-BASED RETURN-FOR-CHARGING CONTROL METHOD**

(30) Priority: 01.12.2023 CN 202311637747
(71) Applicant: Amicro Technology Co., Ltd., Guangdong 519000 (CN)
(72) Inventor: LIAO, Shoujian, Zhuhai, Guangdong 519000 (CN); TANG, Weihua, Zhuhai, Guangdong 519000 (CN)
(74) Representative: Neves, Ana
(86) International application number: PCT/CN2024/130141
(87) International publication number: WO 2025/113122

(57) **Abstract**

A reference guidance direction-based return-for-charging control method includes: Step A, setting a plurality of reference guidance directions and a plurality of guidance priority levels for a plurality of grids in a preset grid map based on a charging guidance signal emitted by a charging pile; Step B, adjusting a reference guidance direction in a grid with a lower guidance priority level in two adjacent grids according to a pointing relationship between the reference guidance directions in the two adjacent grids, and updating an adjusted reference guidance direction in the grid with the lower guidance priority level as the reference guidance direction; and Step C, controlling a robot to move from a preset return-for-charging start grid toward the charging pile based on the plurality of reference guidance directions in the plurality of grids, to allow the robot to move to a position where the robot docks with the charging pile for charging. In the present disclosure, it is able to fix return-for-charging information in a grid region covered by the signal according to the reference guidance directions in the grids, and simplify and fix a return- for-charging logic.

## Description

### TECHNICAL FIELD

The present disclosure relates to the field of robot control technology, in particular to a reference guidance direction-based return-for-charging control method.

### BACKGROUND

Charging guidance signals are emitted by a plurality of transmitting probes of transmitters at a plurality of positions on a charging pile to form a fan-like signal distribution map, and they include middle signals, left signals and right signals. At this time, a left transmitter and a right transmitter are arranged at two side surfaces of the charging pile for detecting blind regions. A conventional robot vacuum cleaner is specifically equipped with 2 to 6 signal receivers, so various signal reception circumstances occur for the robot vacuum cleaner, e.g., an overlapping region of alignment signals formed after the middle signal is divided into a middle-left signal and a middle-right signal is not centered (the overlapping region is skewed in a case that an infrared signal is reflected inside a base station due to the structural design of the base station in the charging pile), a boundary-crossing phenomenon occurs for the signals emitted by the left transmitter and the right transmitter, the distribution of the signals emitted by the charging pile in a region of a regular shape is not even, etc. At this time, charging information marked in evenly-distributed cells is inconstant. In a case that the robot vacuum cleaner returns to the charging pile for charging according to the charging guidance signal, the complexity of exploring and applying the charging guidance signal increases, and a large amount of unstable motion control business logic is triggered, resulting in an increase in the time and effort for manually training the robot to perform return-for-charging.

### SUMMARY

The present disclosure provides the following technical solutions.

The present disclosure provides in some embodiments a reference guidance direction-based return-for-charging control method, including: Step A, setting a plurality of reference guidance directions and a plurality of guidance priority levels for a plurality of grids in a preset grid map based on a charging guidance signal emitted by a charging pile; Step B, adjusting a reference guidance direction in a grid with a lower guidance priority level in two adjacent grids in the plurality of grids according to a pointing relationship between the reference guidance directions in the two adjacent grids, and updating an adjusted reference guidance direction in the grid with the lower guidance priority level as the reference guidance direction; and Step C, controlling a robot to move from a preset return-for-charging start grid toward the charging pile based on the plurality of reference guidance directions in the plurality of grids, to allow the robot to move to a position where the robot docks with the charging pile for charging. As compared with the related art, in the embodiments of the present disclosure, the reference guidance directions and the guidance priority levels are set in the grids in the preset grid map, and the reference guidance direction in the grid with a lower guidance priority level is adjusted to point to the grid region where the charging pile is located according to the pointing relationship between the reference guidance directions in two adjacent grids, so as to fix return-for-charging information in a grid region covered by the signal according to the reference guidance direction in the grid, and quantify the return-for-charging information into a directional element (a unique variable in a corresponding grid). The directional element is used as a reference for the return-for-charging, and the robot is controlled according to the reference guidance direction to move to the charging pile. As a result, it is able to simplify and fix a return-for-charging logic, and reduce the complexity of exploring and applying the charging guidance signal, thereby to enable the robot to be autonomously trained according to the reference guidance directions in the given grids to obtain a return-for-charging path, reduce the human intervention, and save research and development costs as well as labor.

### BRIEF DESCRIPTION OF THE DRAWINGS

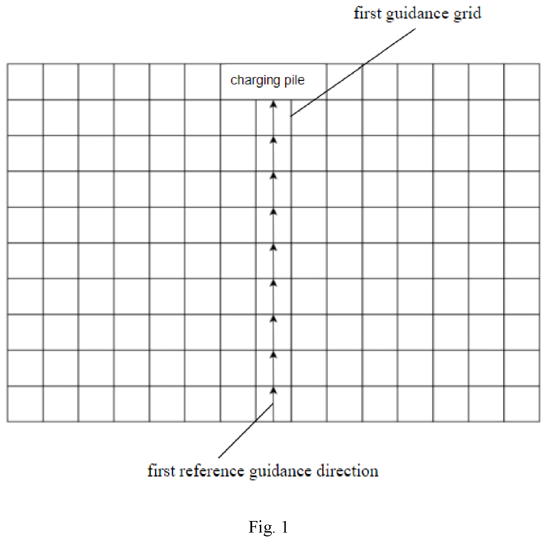

Fig. 1 is a schematic view showing a first reference guidance direction set in front of a grid region where a charging pile is located according to an embodiment of the present disclosure.

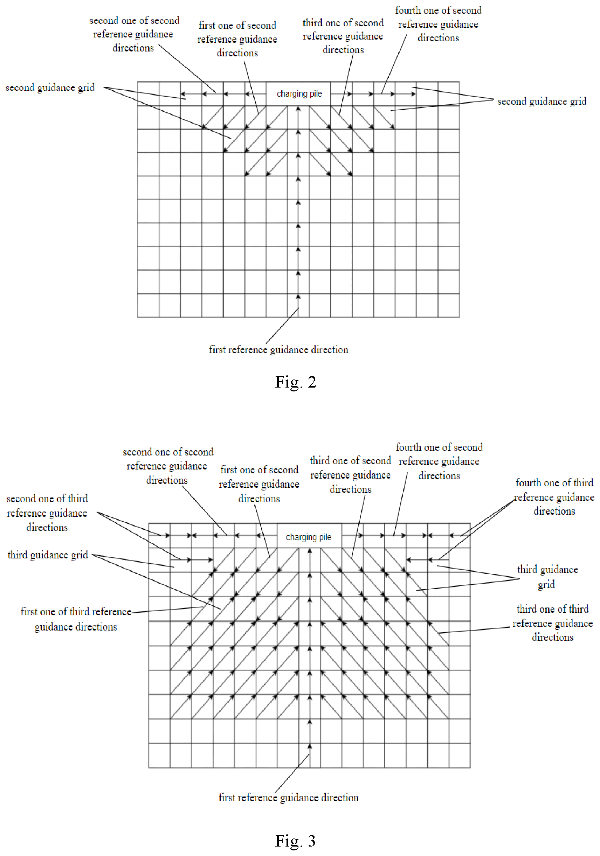

Fig. 2 is a schematic view showing a second one of second reference guidance directions and a fourth one of second reference guidance directions at a left side and a right side of the grid region where the charging pile is located respectively, and a first one of second reference guidance directions and a third one of second reference guidance directions at a left side and a right side of a line vertical to a front side of the grid region where the charging pile is located (the line extends along a vertical forward direction from a middle position of the grid region where the charging pile is located) respectively according to an embodiment of the present disclosure.
Fig. 3 is a schematic view showing a second one of third reference guidance directions and a fourth one of third reference guidance directions at the left side and the right side of the grid region where the charging pile is located respectively, and a first one of third reference guidance directions and a third one of third reference guidance directions at the left side and the right side of the line vertical to the front side of the grid region where the charging pile is located (the line extends along the vertical forward direction from a middle position of the grid region where the charging pile is located) respectively according to an embodiment of the present disclosure.

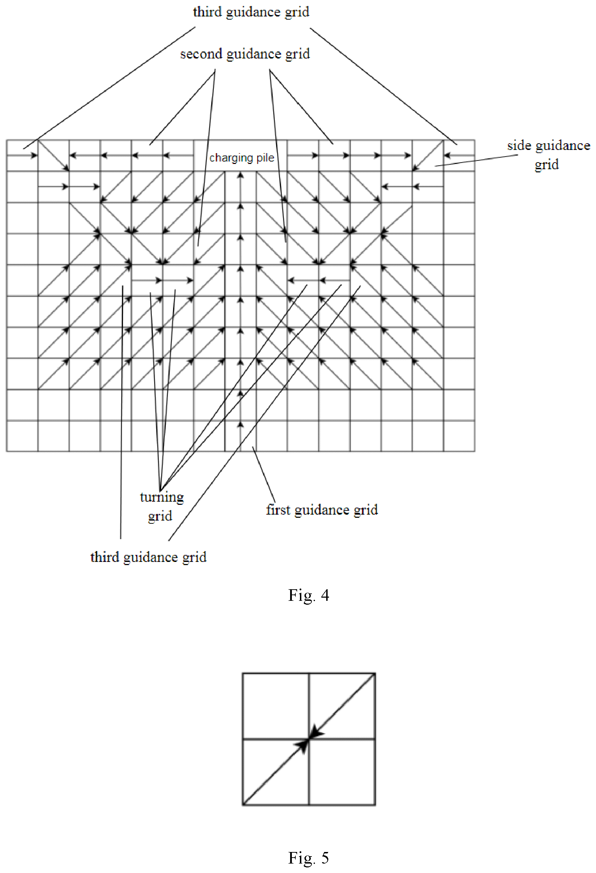

Fig. 4 is a schematic view showing a situation where a turning grid and a side guidance grid are set in two adjacent grids in which the reference guidance directions are opposite to each other, and the third reference guidance direction is adjusted according to an embodiment of the present disclosure.
Fig. 5 is a schematic view showing a situation where the reference guidance directions in two grids along a diagonal line of a grid region including four grids are opposite to each other according to an embodiment of the present disclosure.

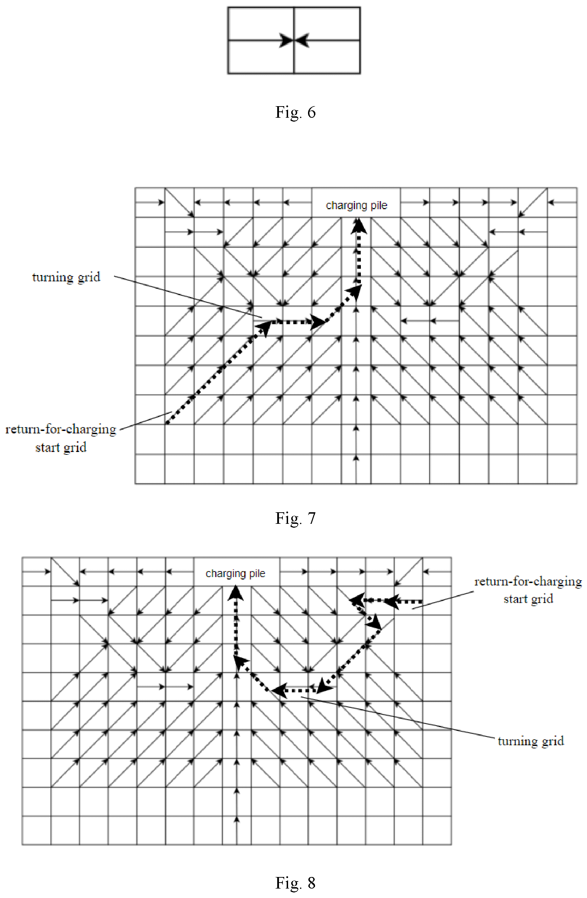

Fig. 6 is a schematic view showing a situation where the reference guidance directions in two adjacent grids in a same row are opposite to each other according to an embodiment of the present disclosure.
Fig. 7 is a schematic view showing a return-for-charging path (indicated by a line with black dots) from a return-for-charging start grid to the charging pile in a case that the return-for-charging start grid is located in a region at a left side of a first guidance grid according to an embodiment of the present disclosure.
Fig. 8 is a schematic view showing a return-for-charging path (indicated by a line with black dots) from the return-for-charging start grid to the charging pile in a case that the return-for-charging start grid is located in a region at a right side of the first guidance grid according to an embodiment of the present disclosure.

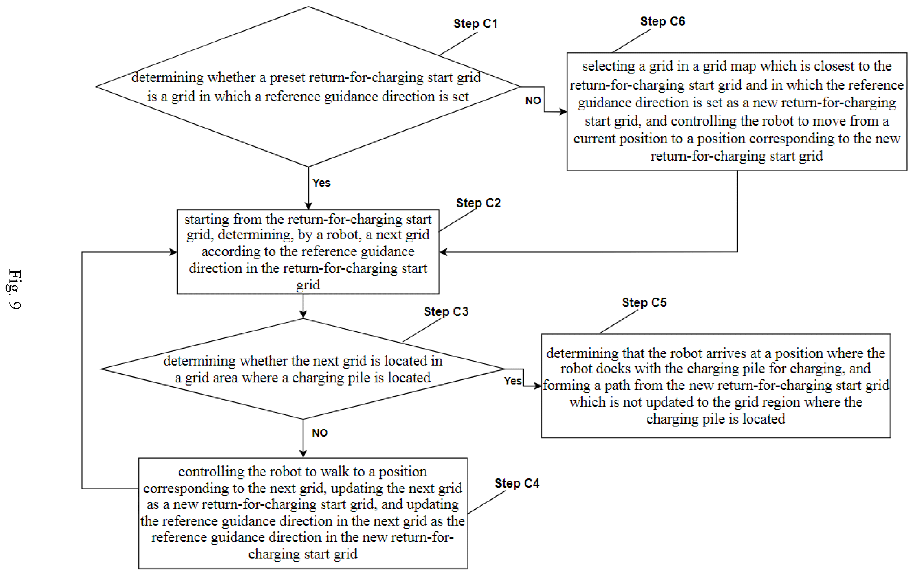

Fig. 9 is a flow chart of Step C of controlling a robot to move toward the charging pile according to the reference guidance directions in the grids according to an embodiment of the present disclosure.

### DETAILED DESCRIPTION OF THE EMBODIMENTS

The technical solutions of the present disclosure will be described hereinafter in details in conjunction with the drawings. In a case of no conflict, the embodiments and the feature therein may be combined with each other. In the embodiments of the present disclosure, it should be appreciated that, such terms as "middle", "middle position", "central axis", "on/above", "under/below", "left", "right", "vertical", "horizontal", "inside" and "outside" are used to indicate directions or positions as viewed in the drawings, and they are merely used to facilitate the description in the present disclosure, rather than to indicate or imply that a device or member must be arranged or operated at a specific position. In addition, such words as "first", "second" and "third" are used to differentiate different features rather than to indicate or imply any importance, sequence or number.

The present disclosure provides in some embodiments a reference guidance direction-based return-for-charging control method. A charging pile is a device for charging a robot, and charging guidance signals emitted by the charging pile are received by the robot, so that the robot is guided to return to the charging pile for charging. The robot includes, but not limited to, an intelligent robot for cleaning, e.g., a robot vacuum cleaner, a mopping robot or a waxing robot.

The robot detects the charging guidance signals emitted by the charging pile in real time during the movement. The charging guidance signals are emitted by the charging pile for guiding the robot back to the charging pile for charging, and these signals have different coverage ranges. Depending on the quantity and locations of infrared transmitters of the charging pile, the charging guidance signals have different types, e.g., a middle docking signal emitted by an infrared transmitter at a front side of the charging pile, a left side signal emitted by an infrared transmitter at a left side of the charging pile, a right side signal emitted by an infrared transmitter at a right side of the charging pile, and a proximity signal emitted by an infrared transmitter of a top lamp of the charging pile (the proximity signal is a fence signal emitted in all directions with the top lamp as a center, and it is assigned with direction information in the embodiments of the present disclosure). In addition, a body of the robot is provided with a plurality of infrared receivers for receiving the charging guidance signals from the charging pile, and these infrared receivers are arranged at different positions of the body. In some embodiments of the present disclosure, the infrared receivers are arranged on the top of the robot and covered by a bubble structure, so that the robot receives the charging guidance signals in all directions conveniently. A posture of the robot is adjusted according to the direction information, so that the robot moves toward the charging pile for charging. Preferably, the robot is charged in a contact or inductive manner, and a front surface of the robot is defined on the basis of an installation position of a charging structure. Here, the front surface may also refer to a surface of the robot to which a movement direction points, so as to facilitate the charging. Moreover, the infrared receivers may also be arranged at two sides of the front surface of the robot.

In the embodiments of the present disclosure, the return-for-charging control method includes the following steps.

Step A: setting a plurality of reference guidance directions and a plurality of guidance priority levels for a plurality of grids in a preset grid map based on the charging guidance signal emitted by the charging pile. A coverage range of the charging guidance signal is divided in advance into the plurality of grids, and the robot in one grid detects a direction in which the charging guidance signal is emitted by the charging pile and a position relationship of the grid relative to the charging pile. In Step A, through setting the reference guidance direction for a corresponding grid, guidance effects of signals of different types or at different positions are indicated, so as to save a storage space through a simplified vector form, increase a processing rate of guidance information, and enable the robot to quickly plan a movement direction from the grid to the charging pile for charging. In Step A, the guidance priority level is further set for the corresponding grid according to the coverage range of the charging guidance signal and a distance between the grid and the charging pile. In some embodiments of the present disclosure, the larger the distance between the grid and a central line of the charging pile, the lower the guidance priority level of the grid.

Before setting the reference guidance direction for the grid, the grid map is possibly generated in a case that the robot moves in an operating region with the charging pile as a center and detects the charging guidance signal, and an origin of a two-dimensional coordinate system of the grid map is a center of a grid region where the charging pile is located. In each grid, the robot calculates a position of the grid relative to the charging pile as well as a condition of the charging guidance signal detected in this grid. In a case that the robot moves to a position where the charging guidance signal needs to be detected, a head of the robot is adjusted to be consistent with a direction in which the detected charging guidance signal is emitted, so that a reception probe in the front of the robot is aligned with the charging pile. The direction in which the charging guidance signal is emitted is calculated at a current position of the robot. Then, the calculated position and the detected condition of the charging guidance signal are recorded in the grid through which the robot passes, so as to obtain the grid with charging guidance information. In addition, the robot further records the reference guidance direction and the grid thereof as signal direction quantitative distribution information, so as to form a signal quantitative distribution map, as indicated by the grid map in Fig. 3. The pre-detected charging guidance signal in the corresponding grid is subjected to quantitative processing, so as to establish a relationship between a return-for-charging guidance direction and a position corresponding to the grid through which the robot passes.

In addition, for different types of the charging guidance signals emitted by the charging pile, a coverage angle range and a coverage distance relative to the charging pile are different. Hence, in the signal quantitative distribution map, the guidance priority level is set according to an angle of the grid offset from the central line of the charging pile and a distance between the grid and the central line of the charging pile. Usually, the larger the distance between the grid and the central line of the charging pile, the lower the guidance priority level.

In the process of detecting the charging guidance signal and generating the grid map, the robot moves in a region at a right side of the charging pile, a region at a right front side of the charging pile, a region in front of the charging pile, a region at a left side of the charging pile and a region at a left front side of the charging pile sequentially to detect the charging guidance signals at various positions. These positions are arranged at a certain interval in a horizontal direction or a vertical direction, or arranged at a certain angular interval with the charging pile as a center, so that the robot records the charging guidance signals distributed evenly in a region in the vicinity of the charging pile in the grid map.

Step B: adjusting a reference guidance direction in a grid with a lower guidance priority level in two adjacent grids in the plurality of grids according to a pointing relationship between the reference guidance directions in the two adjacent grids, and updating an adjusted reference guidance direction in the grid with the lower guidance priority level as the reference guidance direction. In the grid map, in Step B, the reference guidance directions in the two adjacent grids need to be extracted, so as to adjust and update the reference guidance direction in the corresponding grid. In addition, the adjustment is performed on the reference guidance direction in the grid with the lower guidance priority level in the two adjacent grids, i.e., the farther the grid is away from the central line or a central axis of the charging pile, the more the reference guidance direction in the grid needs to be adjusted to approximately vertically point to the grid region where the charging pile is located. Then, the updated reference guidance direction and the grid thereof are recorded to form the final signal direction quantitative distribution information, so as to provide a reference for the subsequent return-for-charging.

In Step B, the pointing relationship between the reference guidance directions in the two adjacent grids includes whether the reference guidance directions in the two adjacent grids point to a same position. As shown in Figs. 5 and 6, arrows in two grids point to a same position to form a pair of directions opposite to each other. In this way, based on a shape feature of the grid, it is able to set the guidance direction information which is easily adjusted, stored and recorded.

Step C: controlling the robot to move from a preset return-for-charging start grid toward the charging pile based on the plurality of reference guidance directions in the grids, to allow the robot to move to a position where the robot docks with the charging pile for charging. In Step C, the reference guidance directions in the grids include the reference guidance directions which have been updated in Step B and the reference guidance directions which are set in Step A but which have not been updated. During the movement of the robot toward the charging pile or after the robot plans a return-for-charging path according to the reference guidance directions in the grids, the robot moves from the preset return-for-charging start grid to a next position according to the reference guidance direction in a corresponding grid, until it arrives at a position where the robot docks with the charging pile for charging (i.e., a grid in front of and adjacent to the charging pile in Fig. 7 or 8).

As compared with the related art, in the embodiments of the present disclosure, the reference guidance directions and the guidance priority levels are set in the grids in the preset grid map, and the reference guidance direction in the grid with a lower guidance priority level is adjusted to point to the grid region where the charging pile is located according to the pointing relationship between the reference guidance directions in two adjacent grids, so as to fix return-for-charging information in a grid region covered by the signal according to the reference guidance direction in the grid, and quantify the return-for-charging information into a directional element (a unique variable in a corresponding grid). The directional element is used as a reference for the return-for-charging, and the robot is controlled according to the reference guidance direction to move to the charging pile. As a result, it is able to simplify and fix a return-for-charging logic, and reduce the complexity of exploring and applying the charging guidance signal, thereby to enable the robot to be autonomously trained according to the reference guidance directions in the given grids to obtain the return-for-charging path, reduce the human intervention, and save research and development costs as well as labor.

To be specific, in Step A, the setting the plurality of reference guidance directions and the plurality of guidance priority levels for the plurality of grids in the preset grid map based on the charging guidance signal emitted by the charging pile includes the following steps.

A plurality of first guidance grids is set in a vertical forward direction in the middle of a front side of the charging pile, and a first reference guidance direction and a guidance priority level are set in a first guidance grid in the plurality of first guidance grids. In the embodiments of the present disclosure, the first reference guidance direction is set in each first guidance grid according to the vertical forward direction in the middle of the front side of the charging pile, and the guidance priority level is configured for each first guidance grid to indicate a priority level of the first guidance grid to be adjusted in Step B. Preferably, a middle docking signal is emitted at the front side of the charging pile, and the middle docking signal is emitted in a direction extending forward from the middle of the front side of the charging pile, i.e., the vertical forward direction in the middle of the front side of the charging pile. The first guidance grids are grids within a coverage range of the middle docking signal, and they are distributed along an extension line of the central axis of the charging pile. The first guidance grids are grids having a highest guidance value to facilitate the linear docking of the robot with the charging pile, so these grids have a highest guidance priority level in the grid map.

As shown in Fig. 1, the first reference guidance direction in the first guidance grid is indicated by arrows in the grids below the charging pile and vertically pointing to the grid region where the charging pile is located, and the first reference guidance direction may be considered as pointing to a middle position of the grid region where the charging pile is located. In a case that the robot moves to the first guidance grid, it may linearly move along the first reference guidance direction to dock with the charging pile for charging. In a movement environment of the robot, in front of the charging pile, the middle docking signal emitted by the charging pile is distributed in a region defined by two oblique lines extending forward in the middle of the charging pile.

A plurality of second guidance grids is set according to a coverage range of a proximity signal emitted by the charging pile, and a second reference guidance direction and a guidance priority level are set in a second guidance grid in the plurality of second guidance grids. To be specific, the second reference guidance direction is set in each second guidance grid according to a relationship between a direction in which the proximity signal is emitted by the charging file and the first reference guidance direction, and the guidance priority level is configured in each second guidance grid to indicate a priority level of the second guidance grid to be adjusted in Step B. The second guidance grids possibly need to be set in a grid region other than the first guidance grids. For example, the second guidance grids are distributed in a region in the vicinity of the charging pile and at two sides of a region where the first guidance grids are located, so as to prevent an influence caused by the grids in which the first reference guidance direction is set in the vertical forward direction in the middle of the front side of the charging pile, and prevent the direction information from being repeatedly marked in the grids. The guidance priority level of the second guidance grid is lower than the guidance priority level of the first guidance grid, i.e., the second guidance grid is configured with a second highest guidance priority level in the grid map.

As shown in Figs. 1 and 2, the second guidance grids are located at two sides of the charging pile and at two sides of a region where the first guidance grids are located in front of the charging pile. In the second guidance grids at two sides of the charging pile, the second reference guidance directions are indicated by arrows in a horizontal direction. For example, a second one of second reference guidance directions is set in the second guidance grid at a left side of the charging pile, and a fourth one of second reference guidance directions is set in the second guidance grid at a right side of the charging pile. In the second guidance grids at two sides of the region where the first guidance grids are located in front of the charging pile, the second reference guidance directions are indicated by arrows angled relative to the central axis of the charging pile at a constant angle. For example, a first one of second reference guidance directions is set in the second guidance grid at a left side of the region where the first guidance grids are located, and a third one of second reference guidance directions is set in the second guidance grid at a right side of the region where the first guidance grids are located. In this way, a divergent signal distribution characteristic of the proximity signal in a region with the charging pile as a center (an arc-shaped distribution characteristic in front of the charging pile) is quantified in the grid map, so as to reduce the marking in a plurality of directions (at least four directions), quantify the proximity signal in the grid map at a single angle, and prevent the occurrence of a boundary-crossing phenomenon for the proximity signal.

A coverage range of an alignment signal emitted by the charging pile other than the coverage range of the proximity signal is set as a valid detection range of the alignment signal. The charging guidance signals include the middle docking signal, the proximity signal and a side guidance signal, and the alignment signal includes the middle docking signal and the side guidance signal. In some embodiments of the present disclosure, the charging guidance signals other than the proximity signal are the alignment signal, and the alignment signal is divided into a left signal and a right signal. As mentioned hereinabove, the first guidance grid and the first reference guidance direction are set, so the alignment signal does not include a middle signal.

A plurality of third guidance grids is set according to the valid detection range of the alignment signal, and a third reference guidance direction and a guidance priority level are set in a third guidance grid in the plurality of third guidance grids. To be specific, the third reference guidance direction is set in each third guidance grid according to the relationship between a direction in which the alignment signal is emitted by the charging pile and the first reference guidance direction, and the guidance priority level is configured for each third guidance grid to indicate a priority of the third guidance grid to be adjusted in Step B. The third guidance grid is arranged in a region outside the coverage range of the proximity signal, and the third reference guidance direction is set in the third guidance grid. In this way, the first reference guidance direction, the second reference guidance direction and the third reference guidance direction are set sequentially from the grid region where the charging pile is located, the third guidance grids are distributed in a region outside a grid region where the second guidance grids are located, and the third guidance grid is located farther away from the central line of the grid region where the charging pile is located than the second guidance grid. The guidance priority level of the third guidance grid is lower than the guidance priority level of the second guidance grid, i.e., the third guidance grid has a lowest guidance priority level in the grid map, so the third reference guidance direction is adjusted preferentially in Step B.

As shown in Figs. 2 and 3, the third guidance grids are distributed at two sides of the charging pile, at two sides of the region where the first guidance grids are located in front of the charging pile, and in a region outside the grid region where the second guidance grids are located, e.g., in a region below the grid region where the second guidance grids are located, as indicated by the grids with newly-added arrows in Fig. 3. In the third guidance grids at two sides of the charging pile, the third reference guidance directions are indicated by the arrows in the horizontal direction. For example, a second one of third reference guidance directions is set in the third guidance grid at a left side of the charging pile, and a fourth one of third reference guidance directions is set in the third guidance grid at a right side of the charging pile. In the third reference guidance grids at two sides of the grid region where the first guidance grids are located in front of the charging pile, the third reference guidance directions are indicated by arrows angled relative to the central axis of the charging pile at a constant angle and pointing to a center of the charging pile. For example, a first one of third reference guidance directions is set in the third guidance grid at a left side of the region where the first guidance grids are located, and a third one of third reference guidance directions is set in the third guidance grid at a right side of the region where the first guidance grids are located.

In the embodiments of the present disclosure, the guidance priority level in the first guidance grid is higher than the guidance priority level in the second guidance grid, and the guidance priority level in the second guidance grid is higher than the guidance priority level in the third guidance grid, so the third reference guidance direction in the third guidance grid is adjusted preferentially. In a case that that the two adjacent grids in Step B include one second guidance grid and one third guidance grid, the third reference guidance direction in the third guidance grid with a lower guidance priority level in the two adjacent grids needs to be adjusted. In a case that the two adjacent grids in Step B include one first guidance grid and one third guidance grid, the third reference guidance direction in the third guidance grid with a lower guidance priority level in the two adjacent grids needs to be adjusted. In a case that the two adjacent grids in Step B include one first guidance grid and one second guidance grid, the second reference guidance direction in the second guidance grid with a lower guidance priority level in the two adjacent grids needs to be adjusted.

In a word, the coverage ranges of the charging guidance signals are divided into grids based on the types thereof, and the reference guidance directions are set in the grids, so as to quantify the return-for-charging information into directional elements (the reference guidance directions set in the grids) according to a certain rule, thereby to enable the robot to quickly determine the movement direction for the return-for-charging according to the directional elements (the reference guidance directions set in the grids).

It should be appreciated that, the charging guidance signals emitted by the charging pile include the middle docking signal, the proximity signal and the side guidance signal. To be specific, the middle docking signal is emitted by an infrared transmitter at the front side of the charging pile, the side guidance signal is emitted by an infrared transmitters at the front side and two sides of the charging pile, and the proximity signal is emitted by an infrared transmitter on the top of the charging pile. Each of the proximity signal and the side guidance signal is divided into a left signal and a right signal, so as to reduce an influence caused in a case that a region of the middle signal and an overlapping region of the left signal and the right signal are not centered.

A predetermined range is determined by the robot based on a position of the charging pile, and a shape and a size of the predetermined range may be set according to a specific design requirement. For example, the predetermined range is of a rectangular, square or elliptical shape, and has an area of 2 m², 3 m² or 4 m². As shown in Figs. 1 to 3, a region defined by an outermost rectangle is the predetermined range. The predetermined range is divided into the plurality of grids, and each grid is also called as a grid unit. The grid is a virtual box with a certain length and a certain width, and the length and the width may be the same or different. However, the plurality of grids must be the same, e.g., boxes each having a size of 0.1 m*0.1 m, or boxes each having a size of 0.1 m*0.15 m, or boxes each having a size of 0.15 m*0.15 m. As shown in Figs. 1 to 8, the grid is a virtual square having a size of 0.1 m*0.1 m, and the plurality of grids forms the preset grid map, i.e., the grid map includes the plurality of virtual squares. A condition of the charging guidance signal collected by the robot is recorded in each grid.

In one embodiment of the present disclosure, as shown in Fig. 1, the setting the plurality of first guidance grids in the vertical forward direction in the middle of the front side of the charging pile and setting the first reference guidance direction in the first guidance grid in the plurality of first guidance grids includes the following steps.

All grids are marked in a vertical forward direction from a middle position of the grid region where the charging pile is located in the grid map as the plurality of first guidance grids. The plurality of first guidance grids is distributed along the central axis of the charging pile, a front side of the grid region where the charging pile is located is a side where the robot docks with the charging pile for charging, and the vertical forward direction in the middle of the front side of the charging pile is the vertical forward direction from the middle position of the grid region where the charging pile is located. The grid region where the plurality of first guidance grids is located is located in front of the grid region where the charging pile is located. The vertical forward direction from the middle position of the grid region where the charging pile is located is represented by a direction opposite to the direction indicated by the arrows in Fig. 1, and this vertical forward direction is perpendicular to the front side of the charging pile, or it is a direction in which the middle docking signal is emitted from the front side of the charging pile. In the embodiments of the present disclosure, a region along the central axis of the charging pile is divided into grids in a simplified manner, so as to form the first guidance grids for guiding the robot to linearly dock with the charging pile for charging.

As shown in Fig. 1, the grid region where the plurality of first guidance grids is located is located below the grid region where the charging pile is located and on the central axis of the charging pile.

A direction opposite to the vertical forward direction from the middle position of the grid region where the charging pile is located is set as the first reference guidance direction, and recording the first reference guidance direction into the first guidance grid in the plurality of first guidance grids. To be specific, angle information about the first reference guidance direction in the two-dimensional coordinate system of the grid map as well as direction information about the first reference guidance direction (a vector line segment), e.g., a start point and an end point of the first reference guidance direction in a single first guidance grid, are stored in a buffer space corresponding to the first guidance grid. Hence, in each first guidance grid, the direction opposite to the vertical forward direction from the middle position of the grid region where the charging pile is located is set as the first reference guidance direction, so that the first reference guidance direction points to the grid region where the charging pile is located in the grid map. The region through which the central axis of the charging pile passes is divided into the grids in which the first reference guidance direction is set, so that the front side of the robot faces a surface of the charging pile for docking and charging. In this way, it is able to reduce the influence on the return-for-charging caused in a case that an overlapping region of the alignment signal is not centered after the middle signal is divided into a middle left signal and a middle right signal.

In one embodiment of the present disclosure, the setting the plurality of second guidance grids according to the coverage range of the proximity signal emitted by the charging pile and setting the second reference guidance direction and the guidance priority level in the second guidance grid in the plurality of second guidance grids includes the following steps.

The coverage range of the proximity signal is divided into grids with the grid region where the charging pile is located as a center, and the plurality of second guidance grids is formed in the coverage range of the proximity signal other than the plurality of first guidance grids, to allow that a second guidance grid in the plurality of second guidance grids corresponds to one position in the coverage range of the proximity signal. The plurality of second guidance grids is located at two sides of a grid region formed by the plurality of first guidance grids and the grid region where the charging pile is located. The coverage range of the proximity signal is a semicircular range with the grid region where the charging pile is located as a center and having a certain radius, with the region where the plurality of first guidance grids is located, i.e., a linear grid region perpendicular to the center of the charging pile, being excluded. As shown in Fig. 2, starting from a row including the grid region where the charging pile is located, the grids are traversed row by row to determine the plurality of second guidance grids distributed in a gradient manner. More second guidance grids are distributed in a region close to the grid region where the charging pile is located, and fewer second guidance grids are distributed in a region away from the grid region where the charging pile is located.

In the embodiments of the present disclosure, depending on different emission directions at the left side of the charging pile, the proximity signal is divided into a middle left proximity signal and a side left proximity signal. A distribution condition of the proximity signal at the left side of the charging pile (including an emission angle of the proximity signal detected by the robot in advance at a corresponding position as well as a corresponding grid) is marked in advance in a corresponding grid region of the grid map. An infrared transmitter is mounted on the top of the charging pile to emit the middle left proximity signal and the side left proximity signal. The middle left proximity signal is emitted in a linear emission direction at a left front side of the charging pile, and the side left proximity signal is emitted in a linear emission direction at the left side of the charging pile.

A direction rotated to the left (i.e., rotated in a counterclockwise direction) by a first target guidance angle relative to the first reference guidance direction is set as a first one of second reference guidance directions, and the first one of second reference guidance directions is recorded into a second guidance grid in the plurality of second guidance grids at a left side of the grid region where the plurality of first guidance grids is located, to allow that a direction opposite to the first one of second reference guidance directions points to a position between the middle position of the front side of the charging pile and the left side of the charging pile. Angle information about the first one of second reference guidance directions in the two-dimensional coordinate system of the grid map as well as direction information about the first one of second reference guidance directions (a vector line segment), e.g., a start point and an end point of the first one of second reference guidance directions in a single second guidance grid, are stored in a buffer space corresponding to the second guidance grid. To be specific, the first one of second reference guidance directions is a linear emission direction of the middle left proximity signal emitted by the charging pile. Illustratively, as shown in Fig. 2, the first one of second reference guidance directions is angled by 135° relative to a vertical direction (i.e., the first reference guidance direction), so that the first target guidance angle is 135°.

A direction rotated to the left (i.e., rotated in a counterclockwise direction) by a second target guidance angle relative to the first reference guidance direction is set as a second one of second reference guidance directions, and the second one of second reference guidance directions is recorded into a second guidance grid in the plurality of second guidance grids at a left side of the grid region where the charging pile is located, to allow that a direction opposite to the second one of second reference guidance directions points to the left side of the charging pile. Angle information about the second one of second reference guidance directions in the two-dimensional coordinate system of the grid map as well as direction information about the second one of second reference guidance directions (a vector line segment), e.g., a start point and an end point of the second one of second reference guidance directions in a single second guidance grid, are stored in a buffer space corresponding to the second guidance grid. To be specific, the second one of second reference guidance directions is a linear emission direction of the side left proximity signal emitted by the charging pile. Illustratively, as shown in Fig. 2, the second one of second reference guidance directions is angled by 90° relative to the vertical direction (i.e., the first reference guidance direction), so that the second target guidance angle is 90°.

It should be appreciated that, the angle between the first one of second reference guidance directions and the first reference guidance direction is included in the angle between the second one of second reference guidance directions and the first reference guidance direction. In a case that the second target guidance angle and the first target guidance angle are within a range of 0° to 180°, the second target guidance angle is less than the first target guidance angle. In a case that the middle left proximity signal and the side left proximity signal are emitted by a same infrared transmitter in the corresponding linear emission directions at the left side of the charging pile, the first one of second reference guidance directions and the second one of second reference guidance directions may be calculated according to the first reference guidance direction in a same arc-like viewing angle range at the left side of the infrared transmitter.

In the embodiments of the present disclosure, depending on different emission directions at the right side of the charging pile, the proximity signal is divided into a middle right proximity signal and a side right proximity signal. A distribution condition of the proximity signal at the right side of the charging pile (including an emission angle of the proximity signal detected by the robot in advance at a corresponding position as well as a corresponding grid) is marked in advance in a corresponding grid region of the grid map. An infrared transmitter is mounted on the top of the charging pile to emit the middle right proximity signal and the side right proximity signal. The middle right proximity signal is emitted in a linear emission direction at a right front side of the charging pile, and the side right proximity signal is emitted in a linear emission direction at the right side of the charging pile.

A direction rotated to the right (i.e., rotated in a clockwise direction) by the first target guidance angle relative to the first reference guidance direction is set as a third one of second reference guidance directions, and the third one of second reference guidance directions is recorded into a second guidance grid in the plurality of second guidance grids at a right side of the grid region where the plurality of first guidance grids is located, to allow that a direction opposite to the third one of second reference guidance directions points to a position between the middle position of the front side of the charging pile and the right side of the charging pile. Angle information about the third one of second reference guidance directions in the two-dimensional coordinate system of the grid map as well as direction information about the third one of second reference guidance directions (a vector line segment), e.g., a start point and an end point of the third one of second reference guidance directions in a single second guidance grid, are stored in a buffer space corresponding to the second guidance grid. To be specific, the third one of second reference guidance directions is a linear emission direction of the middle right proximity signal emitted by the charging pile. Illustratively, as shown in Fig. 2, the third one of second reference guidance directions is angled by 135° relative to the vertical direction (i.e., the first reference guidance direction), so that the first target guidance angle is 135°.

A direction rotated to the right (i.e., rotated in a clockwise direction) by the second target guidance angle relative to the first reference guidance direction is set as a fourth one of second reference guidance directions, and the fourth one of second reference guidance directions is recorded into a second guidance grid in the plurality of second guidance grids at a right side of the grid region where the charging pile is located, to allow that a direction opposite to the fourth one of second reference guidance directions points to the right side of the charging pile.

It should be appreciated that, the angle between the fourth one of second reference guidance directions and the first reference guidance direction is included in the angle between the third one of second reference guidance directions and the first reference guidance direction. In a case that the second target guidance angle and the first target guidance angle are within a range of 0° to 180°, the second target guidance angle is less than the first target guidance angle. In a case that the middle right proximity signal and the side right proximity signal are emitted by a same infrared transmitter in the corresponding linear emission directions at the right side of the charging pile, the third one of second reference guidance directions and the fourth one of second reference guidance directions may be calculated according to the first reference guidance direction in a same arc-like viewing angle range at the right side of the infrared transmitter.

In a word, in the above-mentioned embodiments of the present disclosure, the proximity signal is quantified according to the coverage range of the proximity signal at two sides of the charging pile, so as to set the first one of second reference guidance directions, the second one of second reference guidance directions, the third one of second reference guidance directions and the fourth one of second reference guidance directions in the second guidance grids at different positions, thereby to indicate the coverage range of the proximity signal with the simplified direction information.

In a case that the grid region where the charging pile is located includes a row of grids in the grid map as shown in Fig. 2, the second guidance grids at the left side of the grid region where the charging pile is located and the second guidance grids at the right side of the grid region where the charging pile is located are distributed in a grid region having a same row number as the grid region where the charging pile is located. In other words, as shown in Fig. 2, the grids in which the second one of second reference guidance directions is set and the grids in which the fourth one of second reference guidance directions is set are located in a same row as the grid region where the charging pile is located. In addition, in a case that the grid region where the plurality of first guidance grids is located includes a column of grids in the grid map, as indicated by the grids with vertical arrows in Fig. 2, the second guidance grids at the left side of the grid region where the plurality of first guidance grids is located and the second guidance grids at the right side of the grid region where the plurality of first guidance grids is located are distributed in a grid region having same row numbers as part of the plurality of first guidance grids. In other words, as shown in Fig. 2, the grids in which the first one of second reference guidance directions (a direction obliquely pointing to a lower left corner) is set and the grids in which the third one of second reference guidance directions (a direction obliquely pointing to a lower right corner) are located in a grid region having same row numbers as three consecutive rows of first guidance grids below the grid region where the charging pile is located.

As shown in Fig. 2, in the grid map, the left side of the grid region corresponds to a negative direction of an x-axis of the two-dimensional coordinate system of the grid map, the right side of the grid region corresponds to a positive direction of the x-axis of the two-dimensional coordinate system of the grid map, a row number is represented by a y-axis coordinate in the two-dimensional coordinate system of the grid map, and a column number is represented by an x-axis coordinate in the two-dimensional coordinate system of the grid map. A center of the grid region where the charging pile is located is an origin of the two-dimensional coordinate system of the grid map.

In addition, in a case that the grid region where the charging pile is located includes a column of grids in the grid map, the plurality of second guidance grids at the left side of the grid region where the charging pile is located and the plurality of second guidance grids at the right side of the grid region where the charging pile is located are distributed in a grid region having a same column number as the grid region where the charging pile is located. Different from the second guidance grids in Fig. 2, positions of the rows and columns are swapped, which however is not shown in the drawings. In addition, in a case that the grid region where the plurality of first guidance grids is located includes a row of grids in the grid map, the plurality of second guidance grids at the left side of the grid region where the plurality of first guidance grids is located and the plurality of second guidance grids at the right side of the grid region where the plurality of first guidance grids is located are distributed in a grid region having same column numbers as part of the plurality of first guidance grids. The column numbers of the part of the plurality of first guidance grids correspond to the column numbers of the second guidance grids in which the first one of second reference guidance directions or the third one of second reference guidance directions is set respectively. The left side of the grid region corresponds to a negative direction of a y-axis of the two-dimensional coordinate system of the grid map, the right side of the grid region corresponds to a positive direction of the y-axis of the two-dimensional coordinate system of the grid map, the column number is represented by a y-axis coordinate in the two-dimensional coordinate system of the grid map, and the row number is represented by an x-axis coordinate in the two-dimensional coordinate system of the grid map, which is different from that shown in Fig. 2.

It should be appreciated that, the plurality of second guidance grids at the left side of the grid region where the plurality of first guidance grids is located does not overlap with the plurality of second guidance grids at the left side of the grid region where the charging pile is located, and the plurality of second guidance grids at the right side of the grid region where the plurality of first guidance grids is located does not overlap with the plurality of second guidance grids at the right side of the grid region where the charging pile is located. The grid region where the plurality of first guidance grids is located does not overlap with the grid region where the charging pile is located, a left portion of the grid region where the plurality of first guidance grids is located does not overlap with a left portion of the grid region where the charging pile is located, and a right portion of the grid region where the plurality of first guidance grids is located does not overlap with a right portion of the grid region where the charging pile is located.

In one embodiment of the present disclosure, the setting the plurality of third guidance grids according to the valid detection range of the alignment signal and setting the third reference guidance direction in the third guidance grid in the plurality of third guidance grids includes the following steps. The valid detection range of the alignment signal is divided into the plurality of third guidance grids, i.e., the plurality of third guidance grids is set in a grid region other than the first guidance grids and the second guidance grids. The plurality of third guidance grids is located at two sides of a grid region formed by the plurality of first guidance grids and the grid region where the charging pile is located. Hence, the plurality of third guidance grids is set outside the coverage region of the proximity signal, and a position of each third guidance grid is within the coverage range of the alignment signal. As shown in Fig. 3, starting from a row including the grid region where the charging pile is located, the grids are traversed row by row to determine the plurality of third guidance grids with the third reference guidance directions (opposite to the second one of second reference guidance directions) at two sides of the grid region where the plurality of second guidance grids is located. There are various alignment signals, so the quantity of third guidance grids in the valid detection range of the alignment signals is greater than the quantity of second guidance grids in the coverage range of the proximity signal.

In the alignment signals, the middle docking signal includes a middle left docking signal emitted at a left front side of the charging pile and a middle right docking signal emitted at a right front side of the charging pile. In the alignment signals, the side guidance signal includes a side left guidance signal emitted at the left side of the charging pile and a side right guidance signal emitted at the right side of the charging pile. An emission angle of the alignment signal detected by the robot in advance at a corresponding position as well as a corresponding grid are marked in advance in a corresponding grid region of the grid map.

Preferably, at the left side of the central axis of the charging pile, the middle docking signal emitted in a linear emission direction close to the central axis of the charging pile, e.g., angled by 45° relative to the central axis of the charging pile, is the middle left docking signal, and the side guidance signal emitted in an emission direction at the left side of the charging pile, e.g., angled by 90° relative to the central axis of the charging pile, is the side left guidance signal.

Preferably, at the right side of the central axis of the charging pile, the middle docking signal emitted in a linear emission direction close to the central axis of the charging pile, e.g., angled by 45° relative to the central axis of the charging pile, is the middle right docking signal, and the side guidance signal emitted in an emission direction at the right side of the charging pile, e.g., angled by 90° relative to the central axis of the charging pile, is the side right guidance signal.

A direction rotated to the right (i.e., rotated in a clockwise direction) by a third target guidance angle relative to the first reference guidance direction is set as a first one of third reference guidance directions, and the first one of third reference guidance directions is recorded into a third guidance grid in the plurality of third guidance grids at the left side of the grid region where the plurality of first guidance grids is located, to allow that the first one of third reference guidance directions points to a position between the middle position of the front side of the charging pile and the left side of the charging pile. To be specific, angle information about the first one of third reference guidance directions in the two-dimensional coordinate system of the grid map as well as direction information about the first one of third reference guidance directions (a vector line segment), e.g., a start point and an end point of the first one of third reference guidance directions in a single third guidance grid, are stored in a buffer space corresponding to the third guidance grid. The first one of third reference guidance directions is a direction opposite to a linear emission direction of the middle left docking signal emitted by the charging pile. Illustratively, as shown in Fig. 3, the first one of third reference guidance directions is angled by 45° relative to a vertical direction (i.e., the first reference guidance direction), so that the third target guidance angle is 45°.

A direction rotated to the right (i.e., rotated in a clockwise direction) by the second target guidance angle relative to the first reference guidance direction is set as a second one of third reference guidance directions, and the second one of third reference guidance directions is recorded into a third guidance grid in the plurality of third guidance grids at the left side of the grid region where the charging pile is located, to allow that the second one of third reference guidance directions points to the left side of the charging pile. To be specific, angle information about the second one of third reference guidance directions in the two-dimensional coordinate system of the grid map as well as direction information about the second one of third reference guidance directions (a vector line segment), e.g., a start point and an end point of the second one of third reference guidance directions in a single third guidance grid, are stored in a buffer space corresponding to the third guidance grid. The second one of third reference guidance directions is a direction opposite to a linear emission direction of the side left guidance signal emitted by the charging pile. Illustratively, as shown in Fig. 3, the second one of third reference guidance directions is angled by 90° relative to a vertical direction (i.e., the first reference guidance direction), so that the second target guidance angle is 90°, i.e., the second one of third reference guidance directions in Fig. 3 horizontally points to the right.

It should be appreciated that, the angle between the first one of third reference guidance directions and the first reference guidance direction is included in the angle between the second one of third reference guidance directions and the first reference guidance direction. In a case that the second target guidance angle and the third target guidance angle are within a range of 0° to 180°, the second target guidance angle is greater than the third target guidance angle. In a case that the middle left docking signal and the side left guidance signal are emitted by a plurality of infrared transmitters respectively in the corresponding linear emission directions at the left side of the charging pile, the first one of third reference guidance directions and the second one of third reference guidance directions may be calculated according to the first reference guidance direction in a same arc-like viewing angle range of each infrared transmitter at the left side of the infrared transmitter.

A direction rotated to the left (i.e., rotated in a counterclockwise direction) by the third target guidance angle relative to the first reference guidance direction is set as a third one of third reference guidance directions, and the third one of third reference guidance directions is recorded into a third guidance grid in the plurality of third guidance grids at the right side of the grid region where the plurality of first guidance grids is located, to allow that the third one of third reference guidance directions points to a position between the middle position of the front side of the charging pile and the right side of the charging pile. To be specific, angle information about the third one of third reference guidance directions in the two-dimensional coordinate system of the grid map as well as direction information about the third one of third reference guidance directions (a vector line segment), e.g., a start point and an end point of the third one of third reference guidance directions in a single third guidance grid, are stored in a buffer space corresponding to the third guidance grid. The third one of third reference guidance directions is a direction opposite to a linear emission direction of the middle right docking signal emitted by the charging pile. Illustratively, as shown in Fig. 3, the third one of third reference guidance directions is angled by 45° relative to a vertical direction (i.e., the first reference guidance direction), so that the third target guidance angle is 45°.

A direction rotated to the left (i.e., rotated in a counterclockwise direction) by the second target guidance angle relative to the first reference guidance direction is set as a fourth one of third reference guidance directions, and the fourth one of third reference guidance directions is recorded into a third guidance grid in the plurality of third guidance grids at the right side of the grid region where the charging pile is located, to allow that the fourth one of third reference guidance direction points to the right side of the charging pile. To be specific, angle information about the fourth one of third reference guidance directions in the two-dimensional coordinate system of the grid map as well as direction information about the fourth one of third reference guidance directions (a vector line segment), e.g., a start point and an end point of the fourth one of third reference guidance directions in a single third guidance grid, are stored in a buffer space corresponding to the third guidance grid. The fourth one of third reference guidance directions is a direction opposite to a linear emission direction of the side right guidance signal emitted by the charging pile. Illustratively, as shown in Fig. 3, the third one of third reference guidance directions is angled by 90° relative to a vertical direction (i.e., the first reference guidance direction), so that the second target guidance angle is 90°, i.e., the fourth one of third reference guidance directions in Fig. 3 horizontally points to the left.

It should be appreciated that, the angle between the third one of third reference guidance directions and the first reference guidance direction is included in the angle between the fourth one of third reference guidance directions and the first reference guidance direction. In a case that the second target guidance angle and the third target guidance angle are within a range of 0° to 180°, the second target guidance angle is greater than the third target guidance angle. In a case that the middle right docking signal and the side right guidance signal are emitted by a plurality of infrared transmitters respectively in the corresponding linear emission directions at the right side of the charging pile, the third one of third reference guidance directions and the fourth one of third reference guidance directions may be calculated according to the first reference guidance direction in a same arc-like viewing angle range of each infrared transmitter at the right side of the infrared transmitter.

In a word, in the above-mentioned embodiments of the present disclosure, two different reference guidance directions are set at two sides of the central axis of the charging pile according to the emission directions of the alignment signals, so as to quantify the reference guidance directions in the coverage range in front of and at two sides of the charging pile, set the reference guidance directions in the corresponding grids of the grid map, and convert the charging guidance signals with a plurality of emission directions or a large viewing angle at two sides of the central axis of the charging pile into two relatively constant reference guidance directions, thereby to enable the robot to quickly move according to the reference guidance directions toward the charging pile for docking and charging.

In a case that the grid region where the charging pile is located includes a row of grids in the grid map, the plurality of third guidance grids at the left side of the grid region where the charging pile is located and the plurality of third guidance grids at the right side of the grid region where the charging pile is located are distributed in a grid region having a same row number as the grid region where the charging pile is located and having a row number adjacent to the row number of the grid region where the charging pile is located. In other words, from top to down as shown in Fig. 3, the grids in which the second one of third reference guidance directions is set, the grids in which the fourth one of third reference guidance directions is set and the grid region where the charging pile is located are distributed in a first row, and the grids in which the second one of third reference guidance directions and the grids in which the fourth one of third reference guidance directions are distributed in a second row adjacent to the first row.

In a case that the grid region where the plurality of first guidance grids is located includes a column of grids in the grid map, the plurality of third guidance grids at the left side of the grid region where the plurality of first guidance grids is located and the plurality of third guidance grids at the right side of the grid region where the plurality of first guidance grids is located are distributed in a grid region having same row numbers as part of the plurality of first guidance grids. As shown in Fig. 3, the grids in which the first one of third reference guidance directions (a direction obliquely pointing to an upper right corner) is set and the grids in which the third one of third reference guidance directions (a direction obliquely pointing to an upper left corner) is set are distributed in a grid region having same row numbers as consecutive six rows of first guidance grids.

As shown in Fig. 3, in the grid map, the left side of the grid region corresponds to a negative direction of an x-axis of the two-dimensional coordinate system of the grid map, the right side of the grid region corresponds a positive direction of the x-axis of the two-dimensional coordinate system of the grid map, the row number is represented by a y-axis coordinate in the two-dimensional coordinate system of the grid map, and the column number is represented by an x-axis coordinate in the two-dimensional coordinate system of the grid map. A center of the grid region where the charging pile is located is an origin of the two-dimensional coordinate system of the grid map.

In addition, although not shown in the drawings, in a case that the grid region where the charging pile is located includes a column of grids in the grid map, the plurality of third guidance grids at the left side of the grid region where the charging pile is located and the plurality of third guidance grids at the right side of the grid region where the charging pile is located are distributed in a grid region having a same column number as the grid region where the charging pile is located and having a column number adjacent to the column number of the grid region where the charging pile is located. Different from the second guidance grids in Fig. 3, positions of the rows and columns are swapped, which however is not shown in the drawings. In addition, in a case that the grid region where the plurality of first guidance grids is located includes a row of grids in the grid map, the plurality of third guidance grids at the left side of the grid region where the plurality of first guidance grids is located and the plurality of third guidance grids at the right side of the grid region where the plurality of first guidance grids is located are distributed in a grid region having same column numbers as part of the plurality of first guidance grids. The column numbers of the part of plurality of first guidance grids correspond to the column numbers of the third guidance grids in which the first one of third reference guidance directions or the third one of third reference guidance directions is set respectively. The left side of the grid region corresponds to a negative direction of a y-axis of the two-dimensional coordinate system of the grid map, the right side of the grid region corresponds to a positive direction of the y-axis of the two-dimensional coordinate system of the grid map, the column number is represented by a y-axis coordinate in the two-dimensional coordinate system of the grid map, and the row number is represented by an x-axis coordinate in the two-dimensional coordinate system of the grid map, which is different from that in Fig. 3.

It should be appreciated that, the plurality of third guidance grids at the left side of the grid region where the plurality of first guidance grids is located does not overlap with the plurality of third guidance grids at the left side of the grid region where the charging pile is located, and the plurality of third guidance grids at the right side of the grid region where the plurality of first guidance grids is located does not overlap with the plurality of third guidance grids at the right side of the grid region where the charging pile is located.

As shown in Figs. 2 and 3, in Step A, the first one of second reference guidance directions is set to be parallel to a diagonal line of the corresponding second guidance grid, so as to point to the lower left to an end point/corner point of the grid. The second one of second reference guidance directions is set to be perpendicular to the first reference guidance direction. Illustratively, the second one of second reference guidance directions is set to be parallel to a boundary of the corresponding second guidance grid and perpendicular to the grid region where the plurality of first guidance grids is located, so as to point to a middle point of the boundary of the grid, as indicated by the arrows horizontally pointing to the left in Figs. 2 and 3.

As shown in Figs. 2 and 3, in Step A, the third one of second reference guidance directions is set to be parallel to a diagonal line of the corresponding second guidance grid, so as to point to the lower right to an end point/corner point of the grid. The fourth one of second reference guidance directions is set to be perpendicular to the first reference guidance direction. Illustratively, the fourth one of second reference guidance directions is set to be parallel to a boundary of the corresponding second guidance grid and perpendicular to the grid region where the plurality of first guidance grids is located, so as to point to a middle point of the boundary of the grid, as indicated by the arrows horizontally pointing to the right in Figs. 2 and 3.

As shown in Figs. 2 and 3, in Step A, the first one of third reference guidance directions is set to be parallel to a diagonal line of the corresponding third guidance grid, so as to point to the upper right to an end point/corner point of the grid. The second one of third reference guidance directions is set to be perpendicular to the first reference guidance direction, i.e., the second one of third reference guidance directions is set to be parallel to a boundary of the corresponding third guidance grid and perpendicular to the grid region where the plurality of first guidance grids is located, as indicated by the arrows horizontally pointing to the right in Figs. 2 and 3. The first one of second reference guidance directions is opposite to the first one of third reference guidance directions, and the second one of second reference guidance directions is opposite to the second one of third reference guidance directions.

In Step A, the third one of third reference guidance directions is set to be parallel to a diagonal line of the corresponding third guidance grid, so as to point to the upper left to an end point/corner point of the grid. The fourth one of the third reference guidance directions is set to be perpendicular to the first reference guidance direction, i.e., the fourth one of third reference guidance directions is set to be parallel to a boundary of the corresponding third guidance grid and perpendicular to the grid region where the plurality of first guidance grids is located, as indicated by the arrows horizontally pointing to the left in Figs. 2 and 3. The third one of second reference guidance directions is opposite to the third one of third reference guidance directions, and the fourth one of second reference guidance directions is opposite to the fourth one of third reference guidance directions.

In a word, a relationship between the first one of second reference guidance directions and the first one of third reference guidance directions, a relationship between the second one of second reference guidance directions and the second one of third reference guidance directions, a relationship between the third one of second reference guidance directions and the third one of third reference guidance directions, and a relationship between the fourth one of second reference guidance directions and the fourth one of third reference guidance directions are determined, so as to enable the robot to accurately determine a position of a grid in which the reference guidance direction is set relative to the central line or central axis of the charging pile, thereby to enable the robot to move toward the charging pile for docking and charging conveniently.

Based on the above, as shown in Figs. 4, 5 and 6 , the first reference guidance direction passes through a center of the first guidance grid where the first reference guidance direction is located and is perpendicular to a boundary of the first guidance grid. In a case that the first reference guidance direction is perpendicular to a horizontal boundary of the first guidance grid, the first reference guidance direction is represented by a perpendicular bisector to the horizontal boundary of the first guidance grid, and it points to the center of the grid region where the charging pile is located. In a case that the center of the grid region where the charging pile is located is used as an origin of the two-dimensional coordinate system of the grid map, the first reference guidance direction is a linear direction pointing to the origin, so as to guide the robot to linearly dock with the charging pile.

As shown in Fig. 3, in the grid region where the plurality of second guidance grids is located, the first one of second reference guidance directions, the second one of second reference guidance directions, the third one of second reference guidance directions and the fourth one of second reference guidance directions pass through centers of the corresponding second guidance grids where the first one of second reference guidance directions, the second one of second reference guidance directions, the third one of second reference guidance directions and the fourth one of second reference guidance directions are located. In a direction away from the grid region where the charging pile is located, the second one of second reference guidance directions and the fourth one of second reference guidance directions in the second guidance grids in a first row are perpendicular to the first reference guidance direction, so that the second target guidance angle is 90°; and the first one of second reference guidance directions and the third one of second reference guidance directions in the second guidance grids in a second row to a fourth row are angled by 135° relative to the first reference guidance direction, so that the first target guidance angle is 135°.

As shown in Fig. 3, in the grid region where the plurality of third guidance grids is located, the first one of third reference guidance directions, the second one of third reference guidance directions, the third one of third reference guidance directions and the fourth one of third reference guidance directions pass through centers of the corresponding third guidance grids where the first one of third reference guidance directions, the second one of third reference guidance directions, the third one of third reference guidance directions and the fourth one of third reference guidance directions are located. In a direction away from the grid region where the charging pile is located, the second one of third reference guidance directions and the fourth one of third reference guidance directions in the third guidance grids in a first row are perpendicular to the first reference guidance direction, so that the second target guidance angle is 90°; and the first one of third reference guidance directions and the third one of third reference guidance directions in the third guidance grids in a second row to an eighth row are angled by 45° relative to the first reference guidance direction, so that the third target guidance angle is 45°.

In this regard, the first one of second reference guidance directions and the third one of second reference guidance directions are arranged symmetrically relative to the central axis of the charging pile, the second one of the second reference guidance directions and the fourth one of second reference guidance directions are arranged symmetrically relative to the central axis of the charging pile, the first one of third reference guidance directions and the third one of third reference guidance directions are arranged symmetrically relative to the central axis of the charging pile, and the second one of third reference guidance directions and the fourth one of third reference guidance directions are arranged symmetrically relative to the central axis of the charging pile.

It should be appreciated that, the first reference guidance direction, the first one of second reference guidance directions, the second one of second reference guidance directions, the third one of second reference guidance directions, the fourth one of second reference guidance directions, the first one of third reference guidance directions, the second one of third reference guidance directions, the third one of third reference guidance directions and the fourth one of third reference guidance directions are supported to be represented by vector line segments in corresponding grids. For each reference guidance direction, there is a start point and an end point of a vector line segment in the grid, so as to determine a direction angle. The start point, the end point or a middle point of the vector line segment may be a center of the grid. An arrow in each grid in Fig. 3 is used to indicate the reference guidance direction, and the direction information, e.g., a position of the start point, a position of the end point and the direction angle of the vector line segment, is stored in a buffer space corresponding to the grid.

In one embodiment of the present disclosure, in Step B, the adjusting the reference guidance direction in the grid with the lower guidance priority level in two adjacent grids in the plurality of grids according to the pointing relationship between the reference guidance directions in the two adjacent grids includes the following steps.

Grids in which reference guidance directions are set in the preset grid map are searched by the robot, and the reference guidance directions in the searched grids are detected. The grids which are searched by the robot and in which the reference guidance directions are set include the first guidance grids, the second guidance grids and the third guidance grids.

Each time the robot searching two adjacent grids, whether edge or corner positions in the two adjacent grids to which the reference guidance directions point are the same is detected. The edge or corner position is a position in a boundary of an individual grid, and it includes a corner point of the grid and a middle point of the boundary of the grid. The two adjacent grids are arranged in a same column or a same row, or arranged along a same diagonal line. A grid region where the two adjacent grids are located includes a grid region where two of the first guidance grids, the second guidance grids and the third guidance grids are located.

In a case that the edge or corner positions in the two adjacent grids to which the reference guidance directions point are the same, the reference guidance directions in the two adjacent grids are determined to be opposite to each other, and the reference guidance direction in a grid with a lower guidance priority level in the two adjacent grids is adjusted, to allow that the adjusted reference guidance direction points to the grid region where the charging pile is located. The reference guidance direction in the grid away from the central axis of the charging pine in the two adjacent grids is adjusted to point to the center of the grid region where the charging pile is located.

In a case that the edge or corner positions in the two adjacent grids to which the reference guidance directions point are not the same, the reference guidance directions in the two adjacent grids are determined to be not opposite to each other, the reference guidance directions in the two adjacent grids are not adjusted, and new adjacent grids are searched. The new adjacent grids include two grids in the plurality of grids in which the reference guidance directions are set and on which no detection is performed. Two adjacent grids may be searched sequentially along a given direction of an x-axis or a y-axis, or searched in a neighborhood with one grid as a center (e.g., in a four-neighborhood, i.e., a region including four grids in Fig. 5), until all the grids in the grid map are searched.

In the embodiments of the present disclosure, a pair of reference guidance directions opposite to each other are set in grids covered by different types of signals respectively. For example, for the second guidance grid and the third guidance grid adjacent to each other in a row direction, a column direction or a diagonal direction, the reference guidance direction in the third guidance grid in Fig. 3 is adjusted to be the reference guidance direction in a turning grid or a side guidance grid in Fig. 4 at a same position (coordinate position). Before the adjustment of the reference guidance direction, the reference guidance directions in the first guidance grids, the second guidance grids or the third guidance grids are the same.

It should be appreciated that, the two adjacent grids include two first guidance grids adjacent to each other in a column direction or a row direction, or include two second guidance grids adjacent to each other in the column direction, the row direction or a diagonal direction, or include two third guidance grids adjacent to each other in the column direction, the row direction or the diagonal direction, or include one second guidance grid and one third guidance grid adjacent to each other in the column direction, the row direction or the diagonal direction, or include one first guidance grid and one third guidance grid adjacent to each other in the column direction, the row direction or the diagonal direction, or include one first guidance grid and one second guidance grid adjacent to each other in the column direction, the row direction or the diagonal direction. The two adjacent grids includes a current grid and a grid in a neighborhood of the current grid.

In the plurality of second guidance grids at one side of the grid region where the plurality of first guidance grids is located, the reference guidance directions in two second guidance grids distributed in the column direction, the row direction or the diagonal direction are the same. As shown in Fig. 3, the reference guidance directions in the second guidance grids at the left side of the grid region where the plurality of first guidance grids is located point to the lower left corner and are parallel to the diagonal lines extending toward the lower left corner in the grids; and the reference guidance directions in the second guidance grids at the right side of the grid region where the plurality of first guidance grids is located point to the lower right corner and are parallel to the diagonal lines extending toward the lower right corner in the grids.

In the plurality of second guidance grids at one side of the grid region where the charging pile is located, the reference guidance directions in two second guidance grids distributed in the column direction or the row direction are the same. It should be appreciated that, as shown in Fig. 3, the second guidance grids at the left side of the grid region where the charging pile is located and the second guidance grids at the right side of the grid region where the charging pile is located are located in a grid region having a same column number as the grid region where the charging pile is located. The reference guidance directions in the second guidance grids at the left side of the grid region where the plurality of first guidance grids is located horizontally point to the left and are parallel to a horizontal boundary of the grid; and the reference guidance directions in the second guidance grids at the right side of the grid region where the plurality of first guidance grids is located horizontally point to the right and are parallel to the horizontal boundary of the grid.

In the plurality of third guidance grids at one side of the grid region where the plurality of first guidance grids is located, the reference guidance directions in two third guidance grids in the column direction, the row direction or the diagonal direction are the same. As shown in Fig. 3, the reference guidance directions in the third guidance grids at the left side of the grid region where the plurality of first guidance grids is located point to the upper right corner and are parallel to the diagonal lines extending toward the upper right corner in the grids; and the reference guidance directions in the third guidance grids at the right side of the grid region where the plurality of first guidance grids is located point to the upper left corner and are parallel to the diagonal lines extending toward the upper left corner in the grids.

In the plurality of third guidance grids at one side of the grid region where the charging pile is located, the reference guidance directions in two third guidance grids distributed in the column direction or the row direction are the same. It should be appreciated that, as shown in Fig. 3, the third guidance grids at the left side of the grid region where the charging pile is located and the third guidance grids at the right side of the grid region where the charging pile is located are located in a grid region having a same column number as the grid region where the charging pile is located and having a column number adjacent to the column number of the grid region where the charging pile is located. In addition, the reference guidance directions in the third guidance grids at the left side of the grid region where the plurality of first guidance grids is located horizontally point to the right and are parallel to a horizontal boundary of the grid; and the reference guidance directions in the third guidance grids at the right side of the grid region where the plurality of first guidance grids is located horizontally point to the left and are parallel to the horizontal boundary of the grid, as indicated by the reference guidance directions in the third guidance grids in a first row and a second row from top to down..

Based on the above, in a case that the two adjacent grids include one second guidance grid and one third guidance grid in a same column or row and the reference guidance directions in the two adjacent grids point to a same midpoint position of a same grid boundary in the corresponding grids, the reference guidance directions in the two adjacent grids are opposite to each other.

As shown in Figs. 3 and 6, in a case that the reference guidance directions in the two adjacent grids are opposite to each other at the left side of the grid region formed by the plurality of first guidance grids and the grid region where the charging pile is located in Fig. 3, the second one of second reference guidance directions and the second one of third reference guidance directions in the two adjacent grids are opposite to each other and point to a midpoint position of a same grid boundary. As shown in Fig. 6, in the two adjacent grids, an arrow in the left grid indicates the second one of third reference guidance directions, and an arrow in the right grid indicates the second one of second reference guidance directions.

In a case that the reference guidance directions in the two adjacent grids are opposite to each other at the right side of the grid region formed by the plurality of first guidance grids and the grid region where the charging pile is located in Fig. 3, the fourth one of second reference guidance directions and the fourth one of third reference guidance directions in the two adjacent grids are opposite to each other and point to a midpoint position of a same grid boundary. As shown in Fig. 6, in the two adjacent grids, an arrow in the left grid indicates the fourth one of second reference guidance directions, and an arrow in the right grid indicates the fourth one of third reference guidance directions.

In a case that the two adjacent grids include one second guidance grid and one third guidance grid distributed along a same diagonal line and the reference guidance directions in the two adjacent grids point to a same corner point position in the corresponding grids, the reference guidance directions in the two adjacent grids are opposite to each other. The edge or corner position includes the midpoint position of the boundary of a single grid or the corner point position of the grid. Usually, a grid in the two adjacent grids away from the central axis of the charging pile is the third guidance grid with the lowest guidance priority level, so that the robot adjusts the reference guidance direction in the third guidance grid preferentially.

A shown in Figs. 3 and 5, in a case that the reference guidance directions in the two adjacent grids are opposite to each other at the left side of the grid region formed by the plurality of first guidance grids and the grid region where the charging pile is located, the first one of second reference guidance directions and the first one of third reference guidance directions in the two adjacent grids are opposite to each other and point to a same corner point position (i.e., one end point of the grid). In four grids as shown in Fig. 5, an arrow in a lower left grid indicates the first one of third reference guidance directions, and an arrow in an upper right grid indicates the first one of second reference guidance directions, i.e., both the first one of third reference guidance directions and the first one of second reference guidance directions point to a center of a region including the four grids.

In one embodiment of the present disclosure, at the left side of the grid region formed by the plurality of first guidance grids and the grid region where the charging pile is located, the adjusting the reference guidance direction in the grid with the lower guidance priority level in two adjacent grids according to the pointing relationship between the reference guidance directions in the two adjacent grids includes the following steps.

Through comparing the grid regions at the left side of the grid region where the plurality of first guidance grids is located in Figs. 3 and 4 with each other, the grids in first, third, fourth and fifth rows are traversed in a direction opposite to the first reference guidance direction, and there exist the following circumstances.

In the third guidance grids in which the reference guidance directions are opposite to the first one of second reference guidance directions in the second guidance grid, a third guidance grid furthest from the grid region where the charging pile is located in the first reference guidance direction is set as a turning grid, the first one of third reference guidance directions in the turning grid is adjusted to be perpendicular to the first reference guidance direction, and the first one of third reference guidance directions perpendicular to the first reference guidance direction is updated as the reference guidance direction in the turning grid, to guide the robot from the turning grid to the first guidance grid. To be specific, the third guidance grid in the fifth row in which the third reference guidance direction points to a same corner point position as the second reference guidance direction in the fourth row in Fig. 3 is set as a turning grid in Fig. 4, and the third reference guidance directions in the two turning grids are rotated in a clockwise direction by 45° so as to horizontally point to the right (to be perpendicular to the first reference guidance direction). In this way, after the robot reaches the turning grid, it may quickly move to a docking position to dock with the charging pile for charging.

In the third guidance grids in which the reference guidance directions are opposite to the first one of second reference guidance directions in the second guidance grid, the first one of third reference guidance directions in the third guidance grids other than the turning grid is adjusted to be angled relative to the first reference guidance direction by 135°, and the first one of third reference guidance directions angled relative to the first reference guidance direction by 135° is updated as the reference guidance directions in the third guidance grids other than the turning grid, so as to adjust the first one of third reference guidance directions at the left side of the charging pile to be perpendicular to the grid where the first reference guidance direction is located, thereby to guide the robot from the third guidance grids to a region directly in front of the grid region where the charging pile is located. In the third row and the fourth row, the third guidance grids in which the third reference guidance directions point to a same corner point position as the second reference guidance directions in a previous row in Fig. 3 are set as the grids in which the reference guidance directions need to be adjusted in Fig. 4. To be specific, the two third reference guidance directions in the third row in Fig. 3 are rotated in a clockwise direction by 90° to the directions indicated by arrows obliquely pointing to the lower right corner in Fig. 4 (rotated by 135° in a clockwise direction relative to the first reference guidance direction), and the two third reference guidance directions in the fourth row in Fig. 3 are rotated in a clockwise direction by 90° to the directions indicated by arrows obliquely pointing to the lower right corner in Fig. 4 (rotated by 135° in a clockwise direction relative to the first reference guidance direction). In this way, the robot moves quickly through the third guidance grids to a region in front of the grid region where the charging pile is located or in a direction perpendicular to the central axis of the charging pile (a line where the first reference guidance direction is located), so as to facilitate the docking and charging of the robot.

The third guidance grid in which the reference guidance direction is opposite to the second one of second reference guidance directions in the second guidance grid is set as a side guidance grid, the second one of third reference guidance directions in the side guidance grid is adjusted to be angled relative to the first reference guidance direction by 135°, and the second one of third reference guidance directions angled relative to the first reference guidance direction by 135° is recorded as the second one of third reference guidance directions in the side guidance grid, to guide the robot from the side guidance grid to a region directly in front of the grid region where the charging pile is located. In the first row, the third guidance grid in which the third reference guidance direction points to a midpoint position of a same boundary as the second reference guidance direction in the adjacent grid in Fig. 3 is set as the side guidance grid in Fig. 4, and the third reference guidance direction in the third guidance grid is rotated by 45° in a clockwise direction to a direction indicated by an arrow obliquely pointing to the lower right corner in the grid having a same column number in the first row in Fig. 4 (rotated by 135° in the clockwise direction relative to the first reference guidance direction). In other words, the reference guidance direction in the side guidance grid is updated as the third reference guidance direction in the third guidance grid in Fig. 4. In this way, the robot moves quickly through the side guidance grid to a region in front of the grid region where the charging pile is located or in a direction perpendicular to the central axis of the charging pile (a line where the first reference guidance direction is located), so as to facilitate the docking and charging of the robot.

In one embodiment of the present disclosure, at the right side of the grid region formed by the plurality of first guidance grids and the grid region where the charging pile is located, the adjusting the reference guidance direction in the grid with the lower guidance priority level in two adjacent grids according to the pointing relationship between the reference guidance directions in the two adjacent grids includes the following steps.

Through comparing the grid regions at the right side of the grid region where the plurality of first guidance grids is located in Figs. 3 and 4 with each other, the grids in first, third, fourth and fifth rows are traversed in a direction opposite to the first reference guidance direction, and there exist the following circumstances.

In the third guidance grids in which the reference guidance directions are opposite to the third one of second reference guidance directions in the second guidance grid, a third guidance grid furthest from the grid region where the charging pile is located in the first reference guidance direction is set as a turning grid, the third one of third reference guidance directions in the turning grid is adjusted to be perpendicular to the first reference guidance direction, and the third one of third reference guidance directions perpendicular to the first reference guidance direction is updated as the reference guidance direction in the turning grid, to guide the robot from the turning grid to the first guidance grid. To be specific, the third guidance grid in the fifth row in which the third reference guidance direction points to a same corner point position as the second reference guidance direction in the fourth row in Fig. 3 is set as a turning grid in Fig. 4, and the third reference guidance directions in the two turning grids are rotated in a clockwise direction by 45° so as to horizontally point to the left in Fig. 4 (to be perpendicular to the first reference guidance direction). In other words, the reference guidance direction in the turning grid is updated as the third one of third reference guidance directions in the third guidance grid in Fig. 4. In this way, after the robot reaches the turning grid, it may quickly move to a docking position to dock with the charging pile for charging.

In the third guidance grids in which the reference guidance directions are opposite to the third one of second reference guidance directions in the second guidance grid, the third one of third reference guidance directions in the third guidance grids other than the turning grid is adjusted to be angled relative to the first reference guidance direction by 135°, and the third one of third reference guidance directions angled relative to the first reference guidance direction by 135° is updated as the reference guidance directions in the third guidance grids other than the turning grid, so as to adjusted the third one of third reference guidance directions at the right side of the charging pile to be perpendicular to the grid where the first reference guidance direction is located, thereby to guide the robot from the third guidance grids to a region directly in front of the grid region where the charging pile is located. In the third row and the fourth row, the third guidance grids in which the third reference guidance directions point to a same corner point position as the second reference guidance directions in a previous row in Fig. 3 are set as the grids in which the reference guidance directions need to be adjusted in Fig. 4. To be specific, the two third reference guidance directions in the third row in Fig. 3 are rotated in a counterclockwise direction by 90° to the directions indicated by arrows obliquely pointing to the lower left corner in Fig. 4 (rotated by 135° in a clockwise direction relative to the first reference guidance direction), and the two third reference guidance directions in the fourth row in Fig. 3 are rotated in a counterclockwise direction by 90° to the directions indicated by arrows obliquely pointing to the lower left corner in Fig. 4 (rotated by 135° in a clockwise direction relative to the first reference guidance direction). In this way, the robot moves quickly through the third guidance grids to a region in front of the grid region where the charging pile is located or in a direction perpendicular to the central axis of the charging pile (a line where the first reference guidance direction is located), so as to facilitate the docking and charging of the robot.

The third guidance grid in which the reference guidance direction is opposite to the fourth one of second reference guidance directions in the second guidance grid is set as a side guidance grid, the fourth one of third reference guidance directions in the side guidance grid is adjusted to be angled relative to the first reference guidance direction by 135°, and the fourth one of third reference guidance directions relative to the first reference guidance direction by 135° is updated as the fourth one of third reference guidance directions in the side guidance grid, to guide the robot from the side guidance grid to a region directly in front of the grid region where the charging pile is located. In the first row, the third guidance grid in which the third reference guidance direction points to a midpoint position of a same boundary as the second reference guidance direction in the adjacent grid in Fig. 3 is set as the side guidance grid in Fig. 4, and the third reference guidance direction in the third guidance grid is rotated by 45° in a counterclockwise direction to a direction indicated by an arrow obliquely pointing to the lower left corner in the grid having a same column number in the first row in Fig. 4 (rotated by 135° relative to the first reference guidance direction). In other words, the reference guidance direction in the side guidance grid is updated as the fourth one of third reference guidance directions in the third guidance grid in Fig. 4. In this way, the robot moves quickly through the side guidance grid to a region in front of the grid region where the charging pile is located or in a direction perpendicular to the central axis of the charging pile (a line where the first reference guidance direction is located), so as to facilitate the docking and charging of the robot.

In one embodiment of the present disclosure, as shown in Fig. 9, in Step C, the controlling the robot to move from the preset return-for-charging start grid toward the charging pile based on the plurality of reference guidance directions in the plurality of grids to allow the robot to move to the position where the robot docks with the charging pile for charging includes the following steps.

Step C1: determining whether the preset return-for-charging start grid is a grid in which the reference guidance direction is set, in a case that the preset return-for-charging start grid is a grid in which the reference guidance direction is set, proceeding to Step C2, and in a case that the preset return-for-charging start grid is not a grid in which the reference guidance direction is set, proceeding to Step C6. The grid in which the reference guidance direction is set includes the first guidance grid, the second guidance grid or the third guidance grid mentioned hereinabove. In a case that the robot moves to the charging pile from the first guidance grid, the second guidance grid or the third guidance grid, the robot may move along the reference guidance directions set in Steps A and B to be in front of the charging pile, and then adjust its posture to dock with the charging pile for charging.

Step C2: determining a next grid from the return-for-charging start grid according to the reference guidance direction in the return-for-charging start grid so as to reduce a distance between the grid where the robot is located and the first guidance grid or determine the first guidance grid as the next grid, and proceeding to Step C3. The reference guidance direction is set in the next grid, and the next grid includes a grid in which the reference guidance direction is adjusted in Step B, or a grid in which the reference guidance direction is set in Step A but not adjusted.

Step C3: determining whether the next grid is located in the grid region where the charging pile is located, in a case that the next grid is located in the grid region where the charging pile is located, proceeding to Step C5, and in a case that the next grid is not located in the grid region where the charging pile is located, proceeding to Step C4, so as to detect in real time whether the robot has finished the entire return-for-charging path.

Step C4: controlling the robot to move to a position corresponding to the next grid, updating the next grid as a new return-for-charging start grid, updating the reference guidance direction in the next grid as the reference guidance direction in the new return-for-charging start grid, and proceeding to Step C2.

Step C5: determining that the robot arrives at a position where the robot docks with the charging pile for charging, i.e., determining that the robot moves to the central axis of the charging pile, and forming a path from the new return-for-charging start grid which is not updated to the grid region where the charging pile is located, so as to plan the return-for-charging path extending to the charging pile. A grid corresponding to the position where the robot docks with the charging pile for charging is the first guidance grid. At this time, the head of the robot is adjusted to point to the first reference guidance direction.

Illustratively, Fig. 7 shows the return-for-charging path (indicated by a line with black dots) from the return-for-charging start grid to the charging pile in a case that the return-for-charging start grid is located in a region at the left side of the first guidance grid. The return-for-charging path in Fig. 7 is located at the left side of the central axis of the charging pile (the grid region where the plurality of first guidance grids is located), so as to guide the robot to dock with the charging pile for charging from the left side of the central axis of the charging pile. Alternatively, Fig. 8 shows the return-for-charging path (indicated by a line with black dots) from the return-for-charging start grid to the charging pile in a case that the return-for-charging start grid is located in a region at the right side of the first guidance grid. The return-for-charging path in Fig. 8 is located at the right side of the central axis of the charging pile (the grid region where the plurality of first guidance grids is located), so as to guide the robot to dock with the charging pile for charging from the right side of the central axis of the charging pile.

Step C6: selecting a grid in the grid map which is closest to the return-for-charging start grid and in which the reference guidance direction is set as a new return-for-charging start grid, controlling the robot to move from a current position to a position corresponding to the new return-for-charging start grid, and proceeding to Step C2. The grid which is closest to the return-for-charging start grid and in which the reference guidance direction is set may be the first guidance grid, the second guidance grid or the third guidance grid. In a case that the robot is initially located at a position outside the coverage range of the alignment signal, usually the third guidance grid is selected as the return-for-charging start grid. In a case that the robot is initially located at a position outside the coverage range of the proximity signal but within the coverage range of the alignment signal, usually the second guidance grid is selected as the return-for-charging start grid. In a case that the robot is initially located at a position adjacent to the grid region where the charging pile is located, the first guidance grid is selected as the return-for-charging start grid.

In the embodiments of the present disclosure, the reference guidance direction in the grid is a direction pointing to the next grid, so as to indicate a movement direction of the robot. Through repeating Step C2, the return-for-charging path is determined from the original return-for-charging start grid to the charging pile according to the reference guidance directions in the grids through the robot moves, so as to charge the robot in Step C based on the reference guidance directions set in Steps A and B.

In Steps C2 to C4, the determining the next grid according to the reference guidance direction in the return-for-charging start grid includes the following steps.

In a case that the return-for-charging start grid is the third guidance grid or the second guidance grid, a grid to which the reference guidance direction in the return-for-charging start grid points is set as the next grid, and the next grid includes a first guidance grid, a second guidance grid or a third guidance grid. Illustratively, as shown in Fig. 7, the return-for-charging start grid is a third guidance grid, and the next grid determined in Step C2 is a third guidance grid diagonally adjacent to the return-for-charging start grid. Next, in Step C4, the robot continues to move along the diagonal direction to a next adjacent third guidance grid in a direction toward the center of the charging pile. Step C4 is performed repeatedly, so as to update the next grid. The robot moves to the next grid along the corresponding reference guidance directions until the next grid is the turning grid. At this time, the next grid is a third guidance grid in which the reference guidance direction is opposite to the second reference guidance direction in the second guidance grid. Next, the robot is guided along the reference guidance direction in the turning grid to the first guidance grid. As shown in Figs. 7 and 8, the third reference guidance direction in the turning grid vertically points to the first guidance grid. After the robot moves through the two adjacent turning grids in a same row, it moves to a third guidance grid which is adjacent to the first guidance grid and which is not configured as the turning grid. Next, the robot moves along the reference guidance direction in the third guidance grid to the first guidance grid. The movement path is indicated by an arrow with black dots which extends to the upper right corner (an extension direction of the diagonal line pointing to the upper right corner) in Fig. 7, or an arrow with black dots which extends to the upper left corner (an extension direction of the diagonal line pointing to the upper left corner) in Fig. 8. Then, the robot moves along the first reference guidance direction in the first guidance grids to a docking position, and a movement path is indicated by an arrow with black dots which vertically points to the charging pile.

In Fig. 7, in a case that the next grid is a third guidance grid, the other third guidance grids are updated as the next grid repeatedly, until the next grid is the turning grid. Then, the first guidance grid is set as the next grid according to the reference guidance direction in the turning grid which has been adjusted in Step B.

In Fig. 8, in a case that the return-for-charging start grid is updated as the second guidance grid, the next grid is determined as the third guidance grid. Next, the robot moves the third guidance grid along the arrow with black dots which points to the lower right corner in Fig. 8. At this time, the third guidance grids through which the robot moves are just the third guidance grids in which the reference guidance directions have been adjusted in Step B. The next grid is set as the turning grid according to the reference guidance direction in the third guidance grid which has been adjusted in Step B, so as to quickly guide the robot the first guidance grid.

In Step C2, the return-for-charging start grid and the next grid are two adjacent grids.

Based on the above, in a case that the return-for-charging start grid is the first guidance grid, a grid to which the reference guidance direction in the return-for-charging start grid points is set as the next grid, and then the other first guidance grid is configured as a new next grid, i.e., the first guidance grids have the highest guidance priority level. The first reference guidance direction in each first guidance grid in the grid map is perpendicular to the front side of the charging pile, so the robot moves along a line perpendicular to the front side of the grid region where the charging pile is located in the first guidance grids, so as to dock with the charging pile for charging.

Hence, through Steps A to C, the directional elements in the corresponding grids are adjusted from far to near according to the guidance priority levels, so as to obtain the return-for-charging path toward the first guidance grids in front of the charging pile.

Obviously, the above are merely part of, rather than all of, the embodiments of the present disclosure, and the technical solutions in the embodiments of the present disclosure may be combined with each other. As mentioned hereinabove, the grid map is combined with the charging guidance signal. However, some other methods may also be used to determine a position of the charging pile. For example, the charging pile is added with a bar code, or the robot is added with a camera to identify the charging pile. These methods will not be particularly defined herein, and specifically they may be obtained through improving a conventional method for visually identifying the charging pile. In addition, a return-for-charging effect may be improved through establishing an aging environment and improving a method for setting the reference guidance direction and the guidance priority level, or using the other related conversion condition, so as to generate the quantification information, store it as firmware, and package and burn the firmware during the manufacture of the robot. In a case that the return-for-charging effect is ideal, the hardware equipment may be modified, e.g., some infrared transmitters in the charging pile or some infrared receivers in the robot may be removed.

Although the preferred embodiments are described above, a person skilled in the art may make modifications and substitutions to these embodiments without departing from the spirit of the present disclosure, and these modifications and substitutions shall also fall within the scope of the present disclosure.

## Claims

1. A reference guidance direction-based return-for-charging control method, comprising:
Step A, setting a plurality of reference guidance directions and a plurality of guidance priority levels for a plurality of grids in a preset grid map based on a charging guidance signal emitted by a charging pile;
Step B, adjusting a reference guidance direction in a grid with a lower guidance priority level in two adjacent grids in the plurality of grids according to a pointing relationship between the reference guidance directions in the two adjacent grids, and updating an adjusted reference guidance direction in the grid with the lower guidance priority level as the reference guidance direction; and
Step C, controlling a robot to move from a preset return-for-charging start grid toward the charging pile based on the plurality of reference guidance directions in the plurality of grids, to allow the robot to move to a position where the robot docks with the charging pile for charging.

2. The reference guidance direction-based return-for-charging control method according to claim 1, wherein in Step A, the setting the plurality of reference guidance directions and the plurality of guidance priority levels for the plurality of grids in the preset grid map based on the charging guidance signal emitted by the charging pile comprises:
setting a plurality of first guidance grids in a vertical forward direction in the middle of a front side of the charging pile, and setting a first reference guidance direction and a guidance priority level in a first guidance grid in the plurality of first guidance grids;
setting a plurality of second guidance grids according to a coverage range of a proximity signal emitted by the charging pile, and setting a second reference guidance direction and a guidance priority level in a second guidance grid in the plurality of second guidance grids; and
setting a coverage range of an alignment signal emitted by the charging pile other than the coverage range of the proximity signal as a valid detection range of the alignment signal, setting a plurality of third guidance grids according to the valid detection range of the alignment signal, and setting a third reference guidance direction and a guidance priority level in a third guidance grid in the plurality of third guidance grids; wherein the alignment signal comprises a middle docking signal and a side guidance signal;
wherein the charging guidance signal comprises the middle docking signal, the proximity signal and the side guidance signal;
the guidance priority level in the first guidance grid is higher than the guidance priority level in the second guidance grid, and the guidance priority level in the second guidance grid is higher than the guidance priority level in the third guidance grid, to allow that the third reference guidance direction in the third guidance grid is adjusted preferentially; and
the plurality of reference guidance directions comprises the first reference guidance direction, the second reference guidance direction and the third reference guidance direction, and the plurality of grids comprises the plurality of first guidance grids, the plurality of second guidance grids and the plurality of third guidance grids.

3. The reference guidance direction-based return-for-charging control method according to claim 2, wherein the setting the plurality of first guidance grids in the vertical forward direction in the middle of the front side of the charging pile and setting the first reference guidance direction in the first guidance grid in the plurality of first guidance grids comprises:
marking all grids in a vertical forward direction from a middle position of a grid region where the charging pile is located in the grid map as the plurality of first guidance grids, wherein the plurality of first guidance grids is distributed along a central axis of the charging pile, a front side of the grid region where the charging pile is located is a side where the robot docks with the charging pile for charging, and the vertical forward direction in the middle of the front side of the charging pile is the vertical forward direction from the middle position of the grid region where the charging pile is located; and
setting a direction opposite to the vertical forward direction from the middle position of the grid region where the charging pile is located as the first reference guidance direction, and recording the first reference guidance direction into the first guidance grid in the plurality of first guidance grids, to allow that the first reference guidance direction vertically points to the grid region where the charging pile is located in the grid map.

4. The reference guidance direction-based return-for-charging control method according to claim 3, wherein the setting the plurality of second guidance grids according to the coverage range of the proximity signal emitted by the charging pile and setting the second reference guidance direction and the guidance priority level in the second guidance grid in the plurality of second guidance grids comprises:
dividing the coverage range of the proximity signal into grids with the grid region where the charging pile is located as a center, and forming the plurality of second guidance grids in the coverage range of the proximity signal other than the plurality of first guidance grids, to allow that a second guidance grid in the plurality of second guidance grids corresponds to one position in the coverage range of the proximity signal, wherein the plurality of second guidance grids is located at two sides of a grid region formed by the plurality of first guidance grids and the grid region where the charging pile is located;
setting a direction rotated to the left by a first target guidance angle relative to the first reference guidance direction as a first one of second reference guidance directions, and recording the first one of second reference guidance directions into a second guidance grid in the plurality of second guidance grids at a left side of a grid region where the plurality of first guidance grids is located, to allow that a direction opposite to the first one of second reference guidance directions points to a position between the middle position of the front side of the charging pile and a left side of the charging pile;
setting a direction rotated to the left by a second target guidance angle relative to the first reference guidance direction as a second one of second reference guidance directions, and recording the second one of second reference guidance directions into a second guidance grid in the plurality of second guidance grids at a left side of the grid region where the charging pile is located, to allow that a direction opposite to the second one of second reference guidance directions points to the left side of the charging pile;
setting a direction rotated to the right by the first target guidance angle relative to the first reference guidance direction as a third one of second reference guidance directions, and recording the third one of second reference guidance directions into a second guidance grid in the plurality of second guidance grids at a right side of the grid region where the plurality of first guidance grids is located, to allow that a direction opposite to the third one of second reference guidance directions points to a position between the middle position of the front side of the charging pile and a right side of the charging pile; and
setting a direction rotated to the right by the second target guidance angle relative to the first reference guidance direction as a fourth one of second reference guidance directions, and recording the fourth one of second reference guidance directions into a second guidance grid in the plurality of second guidance grids at a right side of the grid region where the charging pile is located, to allow that a direction opposite to the fourth one of second reference guidance directions points to the right side of the charging pile;
wherein in a case that the second target guidance angle and the first target guidance angle are within a range of 0° to 180°, the second target guidance angle is less than the first target guidance angle; and
the second reference guidance direction comprises the first one of second reference guidance directions, the second one of second reference guidance directions, the third one of second reference guidance directions and the fourth one of second reference guidance directions.

5. The reference guidance direction-based return-for-charging control method according to claim 4, wherein in a case that the grid region where the charging pile is located comprises a row of grids in the grid map, the plurality of second guidance grids at the left side of the grid region where the charging pile is located and the plurality of second guidance grids at the right side of the grid region where the charging pile is located are distributed in a grid region having a same row number as the grid region where the charging pile is located; in a case that the grid region where the plurality of first guidance grids is located comprises a column of grids in the grid map, the second guidance grids at the left side of the grid region where the plurality of first guidance grids is located and the plurality of second guidance grids at the right side of the grid region where the plurality of first guidance grids is located are distributed in a grid region having same row numbers as part of the plurality of first guidance grids; the left side of the grid region corresponds to a negative direction of an x-axis of a two-dimensional coordinate system of the grid map, the right side of the grid region corresponds to a positive direction of the x-axis of the two-dimensional coordinate system of the grid map, the row number is represented by a y-axis coordinate in the two-dimensional coordinate system of the grid map, and a column number is represented by an x-axis coordinate in the two-dimensional coordinate system of the grid map;
in a case that the grid region where the charging pile is located comprises a column of grids in the grid map, the plurality of second guidance grids at the left side of the grid region where the charging pile is located and the plurality of second guidance grids at the right side of the grid region where the charging pile is located are distributed in a grid region having a same column number as the grid region where the charging pile is located; in a case that the grid region where the plurality of first guidance grids is located comprises a row of grids in the grid map, the plurality of second guidance grids at the left side of the grid region where the plurality of first guidance grids is located and the plurality of second guidance grids at the right side of the grid region where the plurality of first guidance grids is located are distributed in a grid region having same column numbers as part of the plurality of first guidance grids; the left side of the grid region corresponds to a negative direction of a y-axis of the two-dimensional coordinate system of the grid map, the right side of the grid region corresponds to a positive direction of the y-axis of the two-dimensional coordinate system of the grid map, the column number is represented by a y-axis coordinate in the two-dimensional coordinate system of the grid map, and a row number is represented by an x-axis coordinate in the two-dimensional coordinate system of the grid map;
wherein the plurality of second guidance grids at the left side of the grid region where the plurality of first guidance grids is located does not overlap with the plurality of second guidance grids at the left side of the grid region where the charging pile is located, and the plurality of second guidance grids at the right side of the grid region where the plurality of first guidance grids is located does not overlap with the plurality of second guidance grids at the right side of the grid region where the charging pile is located.

6. The reference guidance direction-based return-for-charging control method according to claim 4, wherein the setting the plurality of third guidance grids according to the valid detection range of the alignment signal and setting the third reference guidance direction in the third guidance grid in the plurality of third guidance grids comprises:
dividing the valid detection range of the alignment signal into the plurality of third guidance grids, wherein a third guidance grid in the plurality of third guidance grids corresponds to one position in the valid detection range of the alignment signal, and the plurality of third guidance grids is distributed at two sides of the grid region formed by the plurality of first guidance grids and the grid region where the charging pile is located;
setting a direction rotated to the right by a third target guidance angle relative to the first reference guidance direction as a first one of third reference guidance directions, and recording the first one of third reference guidance directions into a third guidance grid in the plurality of third guidance grids at the left side of the grid region where the plurality of first guidance grids is located, to allow that the first one of third reference guidance directions points to a position between the middle position of the front side of the charging pile and the left side of the charging pile;
setting a direction rotated to the right by the second target guidance angle relative to the first reference guidance direction as a second one of third reference guidance directions, and recording the second one of third reference guidance directions into a third guidance grid in the plurality of third guidance grids at the left side of the grid region where the charging pile is located, to allow that the second one of third reference guidance directions points to the left side of the charging pile;
setting a direction rotated to the left by the third target guidance angle relative to the first reference guidance direction as a third one of third reference guidance directions, and recording the third one of third reference guidance directions into a third guidance grid in the plurality of third guidance grids at the right side of the grid region where the plurality of first guidance grids is located, to allow that the third one of third reference guidance directions points to a position between the middle position of the front side of the charging pile and the right side of the charging pile; and
setting a direction rotated to the left by the second target guidance angle relative to the first reference guidance direction as a fourth one of third reference guidance directions, and recording the fourth one of third reference guidance directions into a third guidance grid in the plurality of third guidance grids at the right side of the grid region where the charging pile is located, to allow that the fourth one of third reference guidance direction points to the right side of the charging pile;
wherein in a case that the second target guidance angle and the third target guidance angle are within a range of 0° to 180°, the third target guidance angle is less than the second target guidance angle; and
the third reference guidance direction comprises the first one of third reference guidance directions, the second one of third reference guidance directions, the third one of third reference guidance directions and the fourth one of third reference guidance directions.

7. The reference guidance direction-based return-for-charging control method according to claim 6, wherein in a case that the grid region where the charging pile is located comprises a row of grids in the grid map, the plurality of third guidance grids at the left side of the grid region where the charging pile is located and the plurality of third guidance grids at the right side of the grid region where the charging pile is located are distributed in a grid region having a same row number as the grid region where the charging pile is located and having a row number adjacent to the row number of the grid region where the charging pile is located; in a case that the grid region where the plurality of first guidance grids is located comprises a column of grids in the grid map, the plurality of third guidance grids at the left side of the grid region where the plurality of first guidance grids is located and the plurality of third guidance grids at the right side of the grid region where the plurality of first guidance grids is located are distributed in a grid region having same row numbers as part of the plurality of first guidance grids; wherein the left side of the grid region corresponds to a negative direction of an x-axis of a two-dimensional coordinate system of the grid map, the right side of the grid region corresponds a positive direction of the x-axis of the two-dimensional coordinate system of the grid map, the row number is represented by a y-axis coordinate in the two-dimensional coordinate system of the grid map, and a column number is represented by an x-axis coordinate in the two-dimensional coordinate system of the grid map;
in a case that the grid region where the charging pile is located comprises a column of grids in the grid map, the plurality of third guidance grids at the left side of the grid region where the charging pile is located and the plurality of third guidance grids at the right side of the grid region where the charging pile is located are distributed in a grid region having a same column number as the grid region where the charging pile is located and having a column number adjacent to the column number of the grid region where the charging pile is located; in a case that the grid region where the plurality of first guidance grids is located comprises a row of grids in the grid map, the plurality of third guidance grids at the left side of the grid region where the plurality of first guidance grids is located and the plurality of third guidance grids at the right side of the grid region where the plurality of first guidance grids is located are distributed in a grid region having same column numbers as part of the plurality of first guidance grids; the left side of the grid region corresponds to a negative direction of a y-axis of the two-dimensional coordinate system of the grid map, the right side of the grid region corresponds to a positive direction of the y-axis of the two-dimensional coordinate system of the grid map, the column number is represented by a y-axis coordinate in the two-dimensional coordinate system of the grid map, and a row number is represented by an x-axis coordinate in the two-dimensional coordinate system of the grid map; and
the plurality of third guidance grids at the left side of the grid region where the plurality of first guidance grids is located does not overlap with the plurality of third guidance grids at the left side of the grid region where the charging pile is located, and the plurality of third guidance grids at the right side of the grid region where the plurality of first guidance grids is located does not overlap with the plurality of third guidance grids at the right side of the grid region where the charging pile is located.

8. The reference guidance direction-based return-for-charging control method according to claim 6, wherein the first one of second reference guidance directions is parallel to a diagonal line of the second guidance grid where the first one of second reference guidance directions is located, and the second one of second reference guidance directions is perpendicular to the first reference guidance direction;
the third one of second reference guidance directions is parallel to a diagonal line of the second guidance grid where the third one of second reference guidance directions is located, and the fourth one of second reference guidance directions is perpendicular to the first reference guidance direction;
the first one of third reference guidance directions is parallel to a diagonal line of the third guidance grid where the first one of third reference guidance directions is located, and the second one of third reference guidance directions is perpendicular to the first reference guidance direction, wherein the first one of second reference guidance directions is opposite to the first one of third reference guidance directions, and the second one of second reference guidance directions is opposite to the second one of third reference guidance directions; and
the third one of third reference guidance directions is parallel to a diagonal line of the third guidance grid where the third one of third reference guidance directions is located, and the fourth one of third reference guidance directions is perpendicular to the first reference guidance direction, wherein the third one of second reference guidance directions is opposite to the third one of third reference guidance directions, and the fourth one of second reference guidance directions is opposite to the fourth one of third reference guidance directions.

9. The reference guidance direction-based return-for-charging control method according to claim 8, wherein the first reference guidance direction passes through a center of the first guidance grid where the first reference guidance direction is located and is perpendicular to a boundary of the first guidance grid;
the first one of second reference guidance directions, the second one of second reference guidance directions, the third one of second reference guidance directions and the fourth one of second reference guidance directions pass through centers of the second guidance grids where the first one of second reference guidance directions, the second one of second reference guidance directions, the third one of second reference guidance directions and the fourth one of second reference guidance directions are located; and
the first one of third reference guidance directions, the second one of third reference guidance directions, the third one of third reference guidance directions and the fourth one of third reference guidance directions pass through centers of the third guidance grids where the first one of third reference guidance directions, the second one of third reference guidance directions, the third one of third reference guidance directions and the fourth one of third reference guidance directions are located,
wherein the first reference guidance direction, the first one of second reference guidance directions, the second one of second reference guidance directions, the third one of second reference guidance directions, the fourth one of second reference guidance directions, the first one of third reference guidance directions, the second one of third reference guidance directions, the third one of third reference guidance directions and the fourth one of third reference guidance directions are supported to be represented by vector line segments in corresponding grids.

10. The reference guidance direction-based return-for-charging control method according to claim 8, wherein in Step B, the adjusting the reference guidance direction in the grid with the lower guidance priority level in two adjacent grids in the plurality of grids according to the pointing relationship between the reference guidance directions in the two adjacent grids comprises:
searching, by the robot, grids in which reference guidance directions are set in the preset grid map, and detecting the reference guidance directions and guidance priority levels in the searched grids;
each time the robot searching two adjacent grids, detecting whether edge or corner positions in the two adjacent grids to which the reference guidance directions point are the same, wherein the edge or corner position is a position in a boundary of an individual grid;
in a case that the edge or corner positions in the two adjacent grids to which the reference guidance directions point are the same, determining that the reference guidance directions in the two adjacent grids are opposite to each other, and adjusting the reference guidance direction in a grid with a lower guidance priority level in the two adjacent grids, to allow that the adjusted reference guidance direction points to the grid region where the charging pile is located; and
in a case that the edge or corner positions in the two adjacent grids to which the reference guidance directions point are not the same, determining that the reference guidance directions in the two adjacent grids are not opposite to each other, not adjusting the reference guidance directions in the two adjacent grids, and searching new adjacent grids, wherein the new adjacent grids are two grids in the plurality of grids in which the reference guidance directions are set and on which no detection is performed.

11. The reference guidance direction-based return-for-charging control method according to claim 10, wherein in a case that the two adjacent grids comprise one second guidance grid and one third guidance grid in a same column or row and the reference guidance directions in the two adjacent grids point to a midpoint position of a same grid boundary in the corresponding grids, the reference guidance directions in the two adjacent grids are opposite to each other; and
in a case that the two adjacent grids comprise one second guidance grid and one third guidance grid distributed along a same diagonal line and the reference guidance directions in the two adjacent grids point to a same corner point position in the corresponding grids, the reference guidance directions in the two adjacent grids are opposite to each other;
wherein the edge or corner position comprises the midpoint position of the boundary of the grid and the corner point position of the grid.

12. The reference guidance direction-based return-for-charging control method according to claim 11, wherein at the left side of the grid region formed by the plurality of first guidance grids and the grid region where the charging pile is located, the adjusting the reference guidance direction in the grid with the lower guidance priority level in two adjacent grids according to the pointing relationship between the reference guidance directions in the two adjacent grids comprises:
in the third guidance grids in which the reference guidance directions are opposite to the first one of second reference guidance directions in the second guidance grid, setting a third guidance grid furthest from the grid region where the charging pile is located in the first reference guidance direction as a turning grid, adjusting the first one of third reference guidance directions in the turning grid to be perpendicular to the first reference guidance direction, and updating the first one of third reference guidance directions perpendicular to the first reference guidance direction as the reference guidance direction in the turning grid, to guide the robot from the turning grid to the first guidance grid, wherein a guidance priority level of the turning grid is lower than the guidance priority level of the second guidance grid;
in the third guidance grids in which the reference guidance directions are opposite to the first one of second reference guidance directions in the second guidance grid, adjusting the first one of third reference guidance directions in the third guidance grids other than the turning grid to be angled relative to the first reference guidance direction by 135°, and updating the first one of third reference guidance directions angled relative to the first reference guidance direction by 135° as the reference guidance directions in the third guidance grids other than the turning grid, to guide the robot from the third guidance grids to a region directly in front of the grid region where the charging pile is located; and
setting the third guidance grid in which the reference guidance direction is opposite to the second one of second reference guidance directions in the second guidance grid as a side guidance grid, adjusting the second one of third reference guidance directions in the side guidance grid to be angled relative to the first reference guidance direction by 135°, and updating the second one of third reference guidance directions angled relative to the first reference guidance direction by 135° as the second one of third reference guidance directions in the side guidance grid, to guide the robot from the side guidance grid to a region directly in front of the grid region where the charging pile is located, wherein a guidance priority level of the side guidance grid is lower than the guidance priority level of the second guidance grid.

13. The reference guidance direction-based return-for-charging control method according to claim 11, wherein at the right side of the grid region formed by the plurality of first guidance grids and the grid region where the charging pile is located, the adjusting the reference guidance direction in the grid with the lower guidance priority level in two adjacent grids according to the pointing relationship between the reference guidance directions in the two adjacent grids comprises:
in the third guidance grids in which the reference guidance directions are opposite to the third one of second reference guidance directions in the second guidance grid, setting a third guidance grid furthest from the grid region where the charging pile is located in the first reference guidance direction as a turning grid, adjusting the third one of third reference guidance directions in the turning grid to be perpendicular to the first reference guidance direction, and updating the third one of third reference guidance directions perpendicular to the first reference guidance direction as the reference guidance direction in the turning grid, to guide the robot from the turning grid to the first guidance grid, wherein a guidance priority level of the turning grid is lower than the guidance priority level of the second guidance grid;
in the third guidance grids in which the reference guidance directions are opposite to the third one of second reference guidance directions in the second guidance grid, adjusting the third one of third reference guidance directions in the third guidance grids other than the turning grid to be angled relative to the first reference guidance direction by 135°, and updating the third one of third reference guidance directions angled relative to the first reference guidance direction by 135° as the reference guidance directions in the third guidance grids other than the turning grid, to guide the robot from the third guidance grids to a region directly in front of the grid region where the charging pile is located; and
setting the third guidance grid in which the reference guidance direction is opposite to the fourth one of second reference guidance directions in the second guidance grid as a side guidance grid, adjusting the fourth one of third reference guidance directions in the side guidance grid to be angled relative to the first reference guidance direction by 135°, and updating the fourth one of third reference guidance directions angled relative to the first reference guidance direction by 135° as the fourth one of third reference guidance directions in the side guidance grid , to guide the robot from the side guidance grid to a region directly in front of the grid region where the charging pile is located, wherein a guidance priority level of the side guidance grid is lower than the guidance priority level of the second guidance grid.

14. The reference guidance direction-based return-for-charging control method according to claim 12 or 13, wherein in Step C, the controlling the robot to move from the preset return-for-charging start grid toward the charging pile based on the plurality of reference guidance directions in the plurality of grids to allow the robot to move to the position where the robot docks with the charging pile for charging comprises:
Step C1, determining whether the preset return-for-charging start grid is a grid in which the reference guidance direction is set, in a case that the preset return-for-charging start grid is a grid in which the reference guidance direction is set, proceeding to Step C2, and in a case that the preset return-for-charging start grid is not a grid in which the reference guidance direction is set, proceeding to Step C6;
Step C2, determining a next grid from the return-for-charging start grid according to the reference guidance direction in the return-for-charging start grid, and proceeding to Step C3, wherein the reference guidance direction is set in the next grid, and the next grid comprises a grid in which the reference guidance direction is adjusted in Step B;
Step C3, determining whether the next grid is located in the grid region where the charging pile is located, in a case that the next grid is located in the grid region where the charging pile is located, proceeding to Step C5, and in a case that the next grid is not located in the grid region where the charging pile is located, proceeding to Step C4;
Step C4, controlling the robot to move to a position corresponding to the next grid, updating the next grid as a new return-for-charging start grid, updating the reference guidance direction in the next grid as the reference guidance direction in the new return-for-charging start grid, and proceeding to Step C2;
Step C5, determining that the robot arrives at a position where the robot docks with the charging pile for charging, and forming a path from the new return-for-charging start grid which is not updated to the grid region where the charging pile is located, wherein a grid corresponding to the position where the robot docks with the charging pile for charging is the first guidance grid; and
Step C6, selecting a grid in the grid map which is closest to the return-for-charging start grid and in which the reference guidance direction is set as a new return-for-charging start grid, controlling the robot to move from a current position to a position corresponding to the new return-for-charging start grid, and proceeding to Step C2;
wherein the reference guidance direction in the grid is a direction pointing to the next grid and represents a movement direction of the robot; and
the grids in which the reference guidance directions are set comprise the first guidance grid, the second guidance grid and the third guidance grid.

15. The reference guidance direction-based return-for-charging control method according to claim 14, wherein in Steps C2 to C4, the determining the next grid according to the reference guidance direction in the return-for-charging start grid comprises:
in a case that the return-for-charging start grid is the third guidance grid or the second guidance grid, setting a grid to which the reference guidance direction in the return-for-charging start grid points as the next grid, and updating the next grid through performing Step C4 multiple times until the next grid is the turning grid, to guide the robot to the position corresponding to the first guidance grid according to the reference guidance direction in the turning grid; and
in a case that the return-for-charging start grid is the first guidance grid, setting a grid to which the reference guidance direction in the return-for-charging start grid points as the next grid, and configuring the other first guidance grid as a new next grid;
wherein in Step C2, the return-for-charging start grid and the next grid are two adjacent grids.
